# EUROPEAN PATENT SPECIFICATION

(11) **EP 2 840 455 B1**
(45) Date of publication and mention of the grant of the patent: **04.04.2018**
(21) Application number: 13882633.4
(22) Date of filing: 27.09.2013
(51) Int. Cl.: G05B 19/418, G06F 3/0481, G05B 19/042, G08C 17/02, G08C 19/16

(54) **METHOD, APPARATUS AND SYSTEM FOR INTELLIGENTLY CONTROLLING DEVICE, AND PLUG-AND-PLAY DEVICE**
VERFAHREN, VORRICHTUNG UND SYSTEM ZUR INTELLIGENTEN STEUERUNG EINER VORRICHTUNG SOWIE PLUG-AND-PLAY-VORRICHTUNG
PROCÉDÉ, APPAREIL ET SYSTÈME POUR LA COMMANDE INTELLIGENTE D'UN DISPOSITIF, ET DISPOSITIF PLUG-AND-PLAY

(30) Priority: 17.05.2013 CN 201310185748
(43) Date of publication of application: 25.02.2015
(73) Proprietor: Huawei Technologies Co., Ltd., Longgang District Shenzhen, Guangdong 518129 (CN)
(72) Inventor: KANG, Zhi, Shenzhen, Guangdong 518129 (CN); FENG, Ke, Shenzhen, Guangdong 518129 (CN); HUANG, Bo, Shenzhen, Guangdong 518129 (CN)
(74) Representative: Kreuz, Georg Maria
(86) International application number: PCT/CN2013/084387
(87) International publication number: WO 2014/183365

(56) References cited:
- WO-A1-2005/032203
- CN-A- 1 863 052
- CN-A- 101 436 972
- CN-A- 102 413 182
- CN-A- 102 938 729
- CN-A- 103 309 308
- FR-A1- 2 853 421
- KR-B1- 101 047 899
- US-A1- 2001 025 349
- US-A1- 2003 197 686
- US-A1- 2010 085 144
- US-A1- 2012 059 932
- US-A1- 2013 082 827

## Description

### TECHNICAL FIELD

The present invention relates to the field of Internet technologies, and in particular, to a method, an apparatus, and a system for intelligently controlling a device, and a plug-and-play device.

### BACKGROUND

In daily life, intelligent control on devices such as refrigerators, washing machines, and televisions can effectively reduce manual operations of a user and improve usage experience of the user for such devices. For example, after a user performs control on a temperature range of a refrigerator, the refrigerator in a running process can intelligently detect a temperature and control the temperature within the temperature range. In this way, the user does not need to perform manual control again subsequently, and therefore usage experience of the user for the refrigerator is effectively improved. For another example, a user may control a period of runtime of a washing machine, so that the washing machine can intelligently run by using a night peak-valley electricity period of time. In this way, the user does not need to manually control the running of the washing machine during the night peak-valley electricity period of time, and therefore usage experience of the user for the washing machine is effectively improved.

Although the foregoing device is intelligent, it is still required as a precondition that a user performs related intelligent control. However, the foregoing device is generally integrated with an intelligent chip, a display screen, and complex keys. This requires a user to have a relatively high intelligent control technology threshold, which therefore causes a great barrier to a user at the time of performing intelligent control and low actual utilization of the foregoing device, which is bad for promotion and popularization.
US 20010025349 A1 disclose that a device monitors an appliance that receives power from a source. The device includes a first coupler that couples the device to the power source. A second coupler couples the device to the appliance. A monitoring circuit is connected to the first coupler and the second coupler to monitor power supplied by the source to the appliance. A communications circuit also is provided. The monitoring circuit provides data based on the monitored power to the communications circuit for output to the first coupler. The communications circuit may include a 83652925EP05 Amended Clean VersionOctober 10, 2016
receiver that receives a signal from the first coupler to control the monitoring circuit. The communications circuit also may include a transceiver that receives a signal from the first coupler to control the monitoring circuit and to transmit monitored power data.

### SUMMARY

Embodiments of the present invention disclose a method, an apparatus, and a system for intelligently controlling a device, and a plug-and-play device, which can perform intelligent control on a device simply, conveniently, and fast.

A first aspect of the embodiments of the present invention provides a method for intelligently controlling a device, including:
acquiring, by a portable controlling device, parameter information of a controlled device in a current state, where the parameter information is used for reflecting a current running state of the controlled device;
generating, by the portable controlling device, a graphical interaction interface including the parameter information, and sending the graphical interaction interface in a form of a data stream to an interaction device for display;
receiving, by the portable controlling device, an input event sent by the interaction device, where the input event is triggered by a user based on the parameter information displayed on the graphical interaction interface of the interaction device;
parsing, by the portable controlling device, the input event to obtain a control instruction corresponding to the parameter information included in the graphical interaction interface; and
sending, by the portable controlling device, the control instruction to the controlled device, so that the controlled device performs, in response to the control instruction, a control operation corresponding to the current running state of the controlled device, where the performing a control operation corresponding to the current running state of the controlled device includes performing an adjustment corresponding to the parameter information included in the graphical interaction interface; wherein the portable controlling device is a plug-and-play device, and the portable controlling device is adapted to control the controlled device through an interface; and
wherein before the acquiring, by the portable controlling device, parameter information of a controlled device in a current state, the method further comprises:
sending, by the portable controlling device, a type acquiring instruction to the controlled device, and receiving type information of the controlled device which is sent by the controlled device in response to the type acquiring instruction, the type information of the controlled device include a device type, model information, or a device manufacturer of the controlled device;
sending, by the portable controlling device, identity information of the portable controlling device and the type information of the controlled device to a cloud server, and receiving a device control service program, which matches with the type information of the controlled device and is sent by the cloud server after the cloud server determines through authentication that the identity information of the portable controlling device is valid; and
controlling, by the portable controlling device, the device control service program matching with the type information of the controlled device to run on the portable controlling device, so as to trigger performing of the step of acquiring parameter information of a controlled device in a current state.

In a first possible implementation manner of the first aspect of the embodiments of the present invention, the parsing, by the portable controlling device, the input event to obtain a control instruction corresponding to the parameter information included in the graphical interaction interface includes:
converting, by the portable controlling device, the input event into an input event matching with the graphical interaction interface generated by the portable controlling device, and parsing the input event obtained through conversion to obtain the control instruction corresponding to the parameter information included in the graphical interaction interface.

With reference to the second possible implementation manner of the first aspect of the embodiments of the present invention, in a third possible implementation manner of the first aspect of the embodiments of the present invention, before the sending, by the portable controlling device, a type acquiring instruction to the controlled device, the method further includes:
sending, by the portable controlling device, a software upgrade request which carries the identity information of the portable controlling device and version information of a device identification service program to the cloud server, and receiving an upgrade packet of the device identification service program matching with the version information of the device identification service program, where the upgrade packet of the device identification service program is sent by the cloud server after the cloud server determines through authentication that the identity information of the portable controlling device is valid;
updating and upgrading, by the portable controlling device, the device identification service program by using the upgrade packet of the device identification service program matching with the version information of the device identification service program, to obtain an upgraded device identification service program; and
controlling, by the portable controlling device, the upgraded device identification service program to run, so as to trigger performing of the step of sending a type acquiring instruction to the controlled device.

With reference to the first aspect of the embodiments of the present invention or any one of the first to third possible implementation manners of the first aspect of the embodiments of the present invention, in a fourth possible implementation manner of the first aspect of the embodiments of the present invention, before the sending, by the portable controlling device, the graphical interaction interface in a form of a data stream to an interaction device for display, the method further includes:
receiving, by the portable controlling device, a connection establishment request sent by the interaction device, and sending a connection completion response corresponding to the connection establishment request to the interaction device in response to the connection establishment request sent by the interaction device.

With reference to the first aspect of the embodiments of the present invention or any one of the first to fourth possible implementation manners of the first aspect of the embodiments of the present invention, in a fifth possible implementation manner of the first aspect of the embodiments of the present invention, the acquiring, by a portable controlling device, parameter information of a controlled device in a current state includes:
sending, by the portable controlling device, a parameter information query instruction to the controlled device, and receiving the parameter information of the controlled device in the current state which is sent by the controlled device in response to the parameter information query instruction.

With reference to the first aspect of the embodiments of the present invention or any one of the first to fifth possible implementation manners of the first aspect of the embodiments of the present invention, in a sixth possible implementation manner of the first aspect of the embodiments of the present invention, the sending, by the portable controlling device, the graphical interaction interface in a form of a data stream to an interaction device for display includes:
encoding, by the portable controlling device, the graphical interaction interface into a video stream of the graphical interaction interface, and sending the video stream of the graphical interaction interface to the interaction device, so that the interaction device decodes the video stream of the graphical interaction interface after receiving the video stream of the graphical interaction interface, renders the decoded video stream of the graphical interaction interface into the graphical interaction interface for display.

A second aspect of the embodiments of the present invention provides a portable controlling device for intelligently controlling a device, including:
a first unit, configured to acquire parameter information of a controlled device in a current state, where the parameter information is used for reflecting a current running state of the controlled device;
a second unit, configured to generate a graphical interaction interface including the parameter information acquired by the first unit;
a third unit, configured to send the graphical interaction interface which is generated by the second unit and is in a form of a data stream to an interaction device for display;
a fourth unit, configured to receive an input event sent by the interaction device, where the input event is triggered by a user based on the parameter information displayed on the graphical interaction interface of the interaction device; and parse the input event to obtain a control instruction corresponding to the parameter information included in the graphical interaction interface, where:
   the third unit is further configured to send the control instruction obtained by the fourth unit to the controlled device, so that the controlled device performs, in response to the control instruction, a control operation corresponding to the current running state of the controlled device, where the performing a control operation corresponding to the current running state of the controlled device includes performing an adjustment corresponding to the parameter information included in the graphical interaction interface; wherein the portable controlling device is a plug-and-play device, and the portable controlling device is adapted to control the controlled device through an interface;
   wherein the portable controlling device further comprises:
   a fifth unit, configured to send a type acquiring instruction to the controlled device, and receive type information of the controlled device which is sent by the controlled device in response to the type acquiring instruction, the type information of the controlled device include a device type, model information, or a device manufacturer of the controlled device;
   a sixth unit, configured to send, to a cloud server, identity information of the portable controlling device and the type information of the controlled device which is received by the fifth unit, and receive a device control service program, which matches with the type information of the controlled device and is sent by the cloud server after the cloud server authenticates the identity information of the portable controlling device to be valid; and
   a seventh unit, configured to control the device control service program matching with the type information of the controlled device and is received by the sixth unit to run on the portable controlling device, so as to trigger the first unit to perform the operation of acquiring the parameter information of the controlled device in the current state.

In a first possible implementation manner of the second aspect of the embodiments of the present invention, a manner for the fourth unit to parse the input event to obtain the control instruction corresponding to the parameter information included in the graphical interaction interface is specifically as follows
the fourth unit converts the input event into an input event matching with the graphical interaction interface generated by the portable controlling device, and parses the input event obtained through conversion to obtain the control instruction corresponding to the parameter information included in the graphical interaction interface.

With reference to the second possible implementation manner of the second aspect of the embodiments of the present invention, in a third possible implementation manner of the second aspect of the embodiments of the present invention, the portable controlling device further includes:
an eighth unit, configured to send a software upgrade request which carries the identity information of the portable controlling device and version information of a device identification service program to the cloud server, and receive an upgrade packet of the device identification service program matching with the version information of the device identification service program, where the upgrade packet of the device identification service program is sent by the cloud server after the cloud server authenticates the identity information of the portable controlling device to be valid;
a ninth unit, configured to update and upgrade the device identification service program by using the upgrade packet of the device identification service program matching with the version information of the device identification service program, to obtain an upgraded device identification service program, where the upgrade packet of the device identification service program is received by the eighth unit; and
a tenth unit, configured to control the upgraded device identification service program obtained by the ninth unit to run, so as to trigger the fifth unit to perform the operation of sending the type acquiring instruction to the controlled device.

With reference to the second aspect of the embodiments of the present invention or the first or third possible implementation manner of the second aspect of the embodiments of the present invention, in a fourth possible implementation manner of the second aspect of the embodiments of the present invention, the third unit is further configured to receive a connection establishment request sent by the interaction device, and send a connection completion response corresponding to the connection establishment request to the interaction device in response to the connection establishment request sent by the interaction device.

With reference to the second aspect of the embodiments of the present invention or any one of the first to fourth possible implementation manners of the second aspect of the embodiments of the present invention, in a fifth possible implementation manner of the second aspect of the embodiments of the present invention, the first unit is configured to send a parameter information query instruction to the controlled device, and receive the parameter information of the controlled device in the current state which is sent by the controlled device in response to the parameter information query instruction.

With reference to the second aspect of the embodiments of the present invention or any one of the first to fifth possible implementation manners of the second aspect of the embodiments of the present invention, in a sixth possible implementation manner of the second aspect of the embodiments of the present invention, a specific manner for the third unit to send the graphical interaction interface in the form of a data stream to the interaction device for display is as follows:
the third unit is configured to encode the graphical interaction interface into a video stream of the graphical interaction interface, and send the video stream of the graphical interaction interface to the interaction device, so that the interaction device decodes the video stream of the graphical interaction interface after receiving the video stream of the graphical interaction interface, renders the decoded video stream of the graphical interaction interface into the graphical interaction interface for display.

A third aspect of the embodiments of the present invention provides a system for intelligently controlling a device, including a portable controlling device, a controlled device, and an interaction device, where:
the portable controlling device is configured to acquire parameter information of the controlled device in a current state, where the parameter information is used for reflecting a current running state of the controlled device; generate a graphical interaction interface including the parameter information; send the graphical interaction interface in a form of a data stream to the interaction device for display; receive an input event sent by the interaction device, where the input event is triggered by a user based on the parameter information displayed on the graphical interaction interface of the interaction device; parse the input event to obtain a control instruction corresponding to the parameter information included in the graphical interaction interface; and send the control instruction to the controlled device; the portable controlling device is further configured to send a type acquiring instruction to the controlled device, receive type information of the controlled device which is sent by the controlled device in response to the type acquiring instruction, send identity information of the portable controlling device and the type information of the controlled device to a cloud server, receive a device control service program, which matches with the type information of the controlled device and is sent by the cloud server after the cloud server determines through authentication that the identity information of the portable controlling device is valid and control the device control service program matching with the type information of the controlled device to run on the portable controlling device, so as to trigger performing of the operation of acquiring the parameter information of the controlled device in the current state, the type information of the controlled device include a device type, model information, or a device manufacturer of the controlled device;
the controlled device is configured to perform, in response to the control instruction, a control operation corresponding to the current running state of the controlled device, where the performing a control operation corresponding to the current running state of the controlled device includes performing an adjustment corresponding to the parameter information included in the graphical interaction interface; and
the interaction device is configured to receive and display the graphical interaction interface which includes the parameter information of the controlled device in the current state and is sent by the portable controlling device, and send, to the portable controlling device, the input event triggered by the user based on the parameter information displayed on the graphical interaction interface of the interaction device; and
wherein the portable controlling device is a plug-and-play device, and the portable controlling device is adapted to control the controlled device through an interface.

In a first possible implementation manner of the third aspect of the embodiments of the present invention, a manner for the portable controlling device to parse the input event to obtain the control instruction corresponding to the parameter information included in the graphical interaction interface is specifically as follows:
the portable controlling device is configured to convert the input event into an input event which matches with the graphical interaction interface generated by the portable controlling device, and parse the input event obtained through conversion to obtain the control instruction corresponding to the parameter information included in the graphical interaction interface.

With reference to the second possible implementation manner of the third aspect of the embodiments of the present invention, in a third possible implementation manner of the third aspect of the embodiments of the present invention, the portable controlling device is further configured to send a software upgrade request which carries the identity information of the portable controlling device and version information of a device identification service program to the cloud server, and receive an upgrade packet of the device identification service program matching with the version information of the device identification service program, where the upgrade packet of the device identification service program is sent by the cloud server after the cloud server determines through authentication that the identity information of the portable controlling device is valid; update and upgrade the device identification service program by using the upgrade packet of the device identification service program matching with the version information of the device identification service program, to obtain an upgraded device identification service program; and control the upgraded device identification service program to run, so as to trigger performing of the operation of sending the type acquiring instruction to the controlled device; and
the cloud server is further configured to receive the software upgrade request which carries the identity information of the portable controlling device and the version information of the device identification service program and is sent by the portable controlling device, and send, to the portable controlling device, the upgrade packet of the device identification service program matching with the version information of the device identification service program after authenticating the identity information of the portable controlling device to be valid.

With reference to the third aspect of the embodiments of the present invention or the first or third possible implementation manner of the third aspect of the embodiments of the present invention, in a fourth possible implementation manner of the third aspect of the embodiments of the present invention, the portable controlling device is further configured to receive a connection establishment request sent by the interaction device, and send a connection completion response corresponding to the connection establishment request to the interaction device in response to the connection establishment request sent by the interaction device; and
the interaction device is further configured to send the connection establishment request to the portable controlling device, and receive the connection completion response, which is corresponding to the connection establishment request and sent by the portable controlling device in response to the connection establishment request.

With reference to the third aspect of the embodiments of the present invention or any one of the first to fourth possible implementation manners of the third aspect of the embodiments of the present invention, in a fifth possible implementation manner of the third aspect of the embodiments of the present invention, a specific manner for the portable controlling device to acquire the parameter information of the controlled device in the current state is as follows:
the portable controlling device is configured to send a parameter information query instruction to the controlled device, and receive the parameter information of the controlled device in the current state which is sent by the controlled device in response to the parameter information query instruction; and
the controlled device is further configured to receive the parameter information query instruction sent by the portable controlling device, and send the parameter information of the controlled device in the current state to the portable controlling device in response to the parameter information query instruction.

With reference to the third aspect of the embodiments of the present invention or any one of the first to fifth possible implementation manners of the third aspect of the embodiments of the present invention, in a sixth possible implementation manner of the third aspect of the embodiments of the present invention, a specific manner for the portable controlling device to send the graphical interaction interface in the form of a data stream to the interaction device for display is as follows:
the portable controlling device is configured to encode the graphical interaction interface into a video stream of the graphical interaction interface, and send the video stream of the graphical interaction interface to the interaction device; and
the interaction device is configured to receive the video stream of the graphical interaction interface sent by the portable controlling device, decode the video stream of the graphical interaction interface, render the decoded video stream of the graphical interaction interface into the graphical interaction interface for display.

In the embodiments of the present invention, after acquiring parameter information of a controlled device in a current state, a controlling device may generate a graphical interaction interface including the parameter information of the controlled device in the current state, and sends the graphical interaction interface in a form of a data stream to an interaction device for display; further, when the controlling device receives an input event sent by the interaction device, because the input event is triggered by a user based on the parameter information displayed on the graphical interaction interface of the interaction device, the controlling device may parse the input event to obtain a control instruction corresponding to the parameter information included in the graphical interaction interface; and then the controlling device may send the control instruction to the controlled device, so that the controlled device performs, in response to the control instruction, a control operation corresponding to a current running state of the controlled device (for example, performing an adjustment corresponding to the parameter information included in the graphical interaction interface). By implementing the embodiments of the present invention, a user does not need to perform related intelligent control on a controlled device by using an intelligent chip, a display screen, and complex keys integrated in the controlled device; and the user can perform intelligent control on the controlled device only by triggering, on an interaction device, an input event based on parameter information included in a graphical interaction interface displayed on the interaction device. In this way, intelligent control on the controlled device can be performed simply, conveniently, and fast.

In addition, by implementing the present invention, the controlled device only needs to have a basic function actuator and does not need to be integrated with an intelligent chip, a display screen, and complex keys. In this way, the user is allowed to have a relatively low intelligent control technology threshold, which greatly reduces a barrier to a user performing intelligent control, increases actual utilization of the controlled device, and benefits promotion and popularization of the controlled device.

Further, by implementing the present invention, the user can trigger, by using the interaction device, the controlled device to perform an intelligent operation at a fixed time and independently, so that the user no longer relies on the controlled device, thus the present invention has good adaptability.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for intelligently controlling a device according to an embodiment of the present invention;
FIG. 2 is a schematic diagram of a network architecture for intelligently controlling a device according to an embodiment of the present invention;
FIG. 3 is a flowchart of another method for intelligently controlling a device based on the network architecture for intelligently controlling a device shown in FIG. 2 according to an embodiment of the present invention;
FIG. 4 is a schematic diagram of a network architecture for upgrading a program according to an embodiment of the present invention;
FIG. 5 is a flowchart of a method for downloading a device control service program to a controlling device by using the network architecture for upgrading a program shown in FIG. 4 according to an embodiment of the present invention;
FIG. 6 is a flowchart of a method for updating a device identification service program to a controlling device by using the network architecture for upgrading a program shown in FIG. 4 according to an embodiment of the present invention;
FIG. 7 is a schematic diagram of a network architecture for a communication connection according to an embodiment of the present invention;
FIG. 8 is a structural diagram of an apparatus for intelligently controlling a device according to an embodiment of the present invention;
FIG. 9 is a structural diagram of another apparatus for intelligently controlling a device according to an embodiment of the present invention;
FIG. 10 is a structural diagram of another apparatus for intelligently controlling a device according to an embodiment of the present invention;
FIG. 11 is a structural diagram of a plug-and-play device according to an embodiment of the present invention; and
FIG. 12 is a structural diagram of a system for intelligently controlling a device according to an embodiment of the present invention.

### DESCRIPTION OF EMBODIMENTS

The following clearly and completely describes the technical solutions in the embodiments of the present invention with reference to the accompanying drawings in the embodiments of the present invention.

Embodiments of the present invention disclose a method, an apparatus, and a system for intelligently controlling a device, which can perform intelligent control on a device simply, conveniently, and fast. The following describes each of the embodiments in detail.

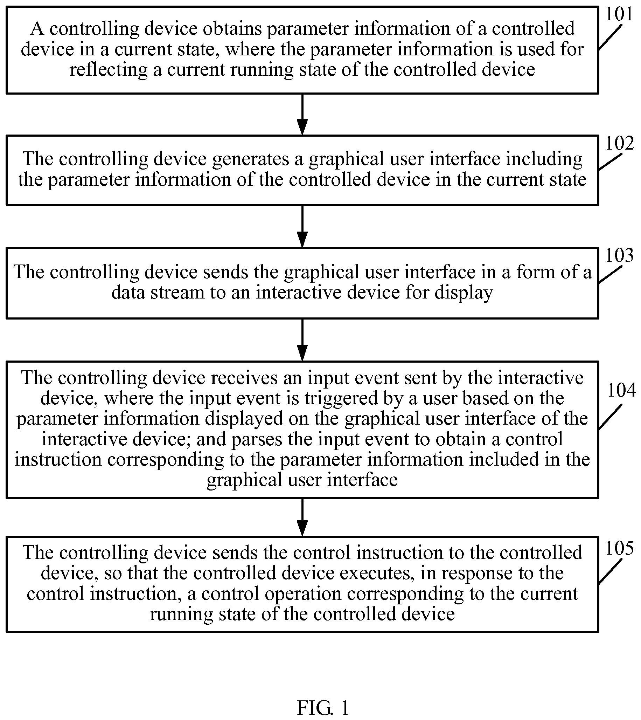

Referring to FIG. 1, FIG. 1 is a flowchart of a method for intelligently controlling a device according to an embodiment of the present invention. In the method for intelligently controlling a device described in FIG. 1, in order to implement intelligent control on a controlled device and provide a user-friendly graphical interaction interface, the embodiment of the present invention introduces two types of devices, that is, an interaction device and a controlling device, based on the controlled device. It should be noted that in the embodiment of the present invention, the controlled device may be a common intelligent device or may also be an ordinary non-intelligent device (such as an ordinary non-intelligent refrigerator, a non-intelligent washing machine, or a non-intelligent television). When the controlled device is an ordinary non-intelligent device, the controlled device is not only integrated with a basic function actuator, but also should be integrated with an interface capable of communicating and interacting with the controlling device, such as, a standard universal serial bus (Universal Serial BUS, USB) interface. The controlling device may be a fixed or portable intelligent terminal. The controlling device not only needs to have an interface (such as, a USB interface) for communicating and interacting with the controlled device, but also needs to have a capability of communicating and interacting with the interaction device. For example, the controlling device and the interaction device can access a same local area network or home network through Wi-Fi, so that the controlling device can communicate and interact with the interaction device through Wi-Fi. The interaction device may also be a portable intelligent terminal having a Wi-Fi capability, such as a mobile phone, a tablet computer, a PC, or another mobile Internet device (Mobile Internet Device, MID), which is not limited in the embodiment of the present invention.

As shown in FIG. 1, the method for intelligently controlling a device disclosed in the embodiment of the present invention may include the following steps.
101: A controlling device acquires parameter information of a controlled device in a current state, where the parameter information is used for reflecting a current running state of the controlled device.
   In an embodiment, after the controlling device and the controlled device establish a connection through a standard USB interface, the controlling device may send a parameter information query instruction to the controlled device, so that the controlled device can send the parameter information of the controlled device in the current state to the controlling device in response to the parameter information query instruction.
   In another embodiment, after the controlling device and the controlled device establish a connection through a standard USB interface, the controlled device may also proactively send the parameter information of the controlled device in the current state to the controlling device, which is not limited in the embodiment of the present invention.
   In the embodiment of the present invention, the parameter information of the controlled device in the current state is generally related to a type of the controlled device. For example, if the controlled device is a refrigerator, the parameter information of the controlled device in the current state may reflect a temperature, a refrigeration mode, a light working mode of the refrigerator in a current running state, even a type or a quantity of food in the refrigerator, or the like. For another example, if the controlled device is a washing machine, the parameter information of the controlled device in the current state may reflect a set washing time, a washing mode (such as standard washing or quick washing),, or the like of the washing machine in a current running state. For still another example, if the controlled device is a television, the parameter information of the controlled device in the current state may reflect a set startup time, a default play channel, a voice volume, or the like of the television in a current running state.
102: The controlling device generates a graphical interaction interface including the parameter information of the controlled device in the current state.
   In an embodiment, the controlling device may encapsulate the parameter information of the controlled device in the current state onto a graphical interaction interface, so as to generate the graphical interaction interface including the parameter information of the controlled device in the current state.
103: The controlling device sends the graphical interaction interface in a form of a data stream to an interaction device for display.
   In an embodiment, the controlling device may encode the graphical interaction interface into a video stream of the graphical interaction interface, and send the video stream of the graphical interaction interface to the interaction device, so that the interaction device decodes the video stream of the graphical interaction interface after receiving the video stream of the graphical interaction interface and renders the decoded video stream of the graphical interaction interface into the graphical interaction interface including the parameter information of the controlled device in the current state.
104: The controlling device receives an input event sent by the interaction device, where the input event is triggered by a user based on the parameter information displayed on the graphical interaction interface of the interaction device; and parses the input event to obtain a control instruction corresponding to the parameter information included in the graphical interaction interface.
   In the embodiment of the present invention, the controlling device may convert the input event into an input event matching with the graphical interaction interface generated by the controlling device, and parse the input event obtained through conversion to obtain the control instruction corresponding to the parameter information included in the graphical interaction interface.
   For example, if the input event sent by the interaction device and received by the controlling device is triggered (such as, triggered through a gesture) by a user based on a temperature parameter that is of a refrigerator in a current state and included in the graphical interaction interface, the controlling device may parse the input event (that is, the gesture), so as to obtain a control instruction corresponding to the temperature parameter that is of the refrigerator in the current state and included in the graphical interaction interface.
105: The controlling device sends the control instruction to the controlled device, so that the controlled device performs, in response to the control instruction, a control operation corresponding to the current running state of the controlled device.

The performing a control operation corresponding to the current running state of the controlled device includes performing an adjustment corresponding to the parameter information included in the graphical interaction interface.

For example, if the controlling device obtains, in the foregoing step 104, the control instruction corresponding to the temperature parameter that is of the refrigerator in the current state and included in the graphical interaction interface, the controlling device may send the control instruction to the controlled device, so that the controlled device performs, in response to the control instruction, an adjustment (such as increase or decrease) of the temperature parameter that is of the refrigerator in the current state and included in the graphical interaction interface, so as to implement intelligent control on the temperature of the refrigerator in the current state.

For another example, if the controlling device obtains, in the foregoing step 104, a control instruction corresponding to a set washing time that is of a washing machine in a current state and included in the graphical user interface, the controlling device may send the control instruction to the controlled device, so that the controlled device performs, in response to the control instruction, an adjustment (such as postponing or bringing forward the washing time) of the set washing time that is of the washing machine in the current state and included in the graphical interaction interface, so as to implement intelligent control on the set washing time of the washing machine in the current state.

By implementing the method described in FIG. 1, a user does not need to perform related intelligent control on a controlled device by using an intelligent chip, a display screen, and complex keys integrated in the controlled device; and the user can perform intelligent control on the controlled device only by triggering, on an interaction device, a gesture instruction corresponding to parameter information included in a graphical interaction interface displayed on the interaction device. In this way, intelligent control on the controlled device can be performed simply, conveniently, and fast.

In addition, by implementing the method described in FIG. 1, the controlled device only needs to have a basic function actuator and does not need to be integrated with an intelligent chip, a display screen, and complex keys. In this way, the user is allowed to have a relatively low intelligent control technology threshold, which significantly reduces a barrier to a user performing intelligent control, increases actual utilization of the controlled device, and benefits promotion and popularization of the controlled device.

Further, by implementing the method described in FIG. 1, the user can trigger, by using the interaction device, a controlled terminal to perform an intelligent operation at a fixed time and independently, so that the user no longer relies on the controlled device, thus the present invention has good adaptability.

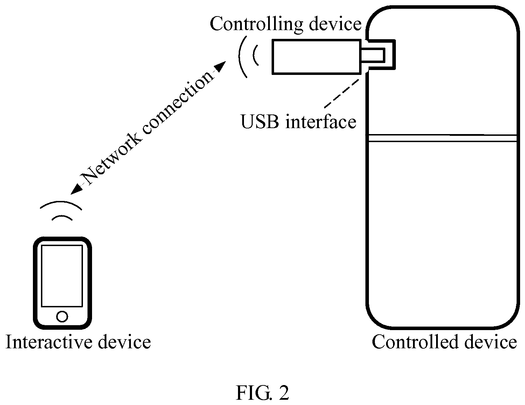

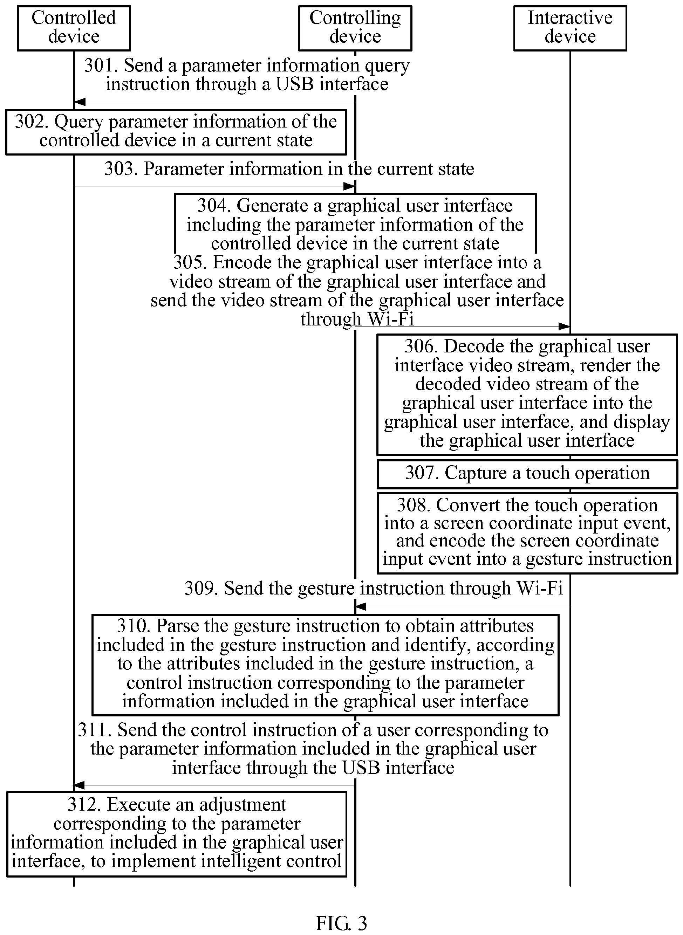

Referring to FIG. 2, FIG. 2 is a schematic diagram of a network architecture for intelligently controlling a device according to an embodiment of the present invention. In the network architecture for intelligently controlling a device shown in FIG. 2, a controlling device can establish a communication connection to an interaction device through a network connection (which includes but is not limited to a wireless connection or a wired connection, such as, Wi-Fi). For example, the controlling device and the interaction device may each access, through Wi-Fi, a local area network where a wireless router is located, so that the controlling device can establish a communication connection to the interaction device through a wireless network connection. In the network architecture for intelligently controlling a device shown in FIG. 2, the controlling device establishes a connection to a controlled device (such as, a refrigerator) through a USB interface. As a control core for intelligently controlling a device, the controlling device may have an intelligent operating system such as Android (Android), and a device control service program for performing device control can run on the intelligent operating system, so as to perform the method for intelligently controlling a device disclosed in the embodiment of the present invention. Also referring to FIG. 3, FIG. 3 is a flowchart of another method for intelligently controlling a device based on the network architecture for intelligently controlling a device shown in FIG. 2 according to an embodiment of the present invention. As shown in FIG. 3, the method for intelligently controlling a device may include the following steps.
301: After establishing a connection to a controlled device (such as, a refrigerator) through a USB interface, a controlling device sends a parameter information query instruction to the controlled device through the USB interface.
302: The controlled device queries parameter information of the controlled device in a current state in response to the parameter information query instruction sent by the controlling device.
   The parameter information query instruction is used for instructing the controlled device to query the parameter information of the controlled device in the current state.
   For example, if the controlled device is a refrigerator, the parameter information of the controlled device in the current state may include a temperature parameter, a refrigeration mode parameter, a light working mode parameter of the refrigerator in the current state, even a type or a quantity of food in the refrigerator, or the like.
303: After packaging the parameter information of the controlled device in the current state, the controlled device sends the packaged parameter information to the controlling device through the standard USB interface.
304: The controlling device receives the parameter information of the controlled device in the current state which is sent by the controlled device, and generates a graphical interaction interface including the parameter information of the controlled device in the current state.
305: The controlling device encodes the graphical interaction interface including the parameter information of the controlled device in the current state into a video stream of the graphical interaction interface, and sends the video stream of the graphical interaction interface to an interaction device through Wi-Fi.
306: After receiving the video stream of the graphical interaction interface sent by the controlling device, the interaction device decodes the video stream of the graphical interaction interface, renders the decoded video stream of the graphical interaction interface into the graphical interaction interface including the parameter information of the controlled device in the current state, where the graphical interaction interface is displayed on a screen of the interaction device .
307: The interaction device captures a touch operation, which is performed by a user based on the parameter information included in the graphical interaction interface.
308: The interaction device converts the captured touch operation, which is performed by the user based on the parameter information included in the graphical interaction interface, into a screen coordinate input event, and encodes the screen coordinate input event into a gesture triggered by the user based on the parameter information included in the graphical interaction interface.
   Content of the gesture triggered by the user based on the parameter information included in the graphical interaction interface may include attributes such as a touch operation type (such as, tap or flick), a touch operation area (including a touch operation start point and end point), a touch operation time, and acceleration direction.
309: The interaction device sends the gesture triggered by the user based on the parameter information included in the graphical interaction interface to the controlling device through Wi-Fi.
310: After receiving the gesture which is triggered by the user based on the parameter information included in the graphical interaction interface and is sent by the interaction device, the controlling device parses the gesture to obtain attributes included in the gesture, and then identifies, according to the attributes included in the gesture, a control instruction corresponding to the parameter information included in the graphical interaction interface.
   For example, the controlling device may determine, according to a touch operation area (including a touch operation start point and end point) attribute included in the content of the gesture, parameter information included in the graphical interaction interface included in the touch operation area, namely, parameter information which the user needs to control; further, the controlling device may also determine, according to an acceleration direction attribute included in the content of the gesture, a control type (such as increasing, decreasing, or changing a mode) of the parameter information which the user needs to control, so as to obtain a control instruction corresponding to the parameter information included in the graphical interaction interface.
   In the embodiment of the present invention, through the foregoing steps 307 to 308, the objective, which is described in the foregoing embodiment, of obtaining a gesture triggered by the user based on the parameter information included in the graphical interaction interface can be achieved, while through the foregoing step 310, the objective, which is described in the foregoing embodiment, of parsing the gesture to obtain a control instruction corresponding to the parameter information included in the graphical interaction interface can be achieved.
311: The controlling device sends the control instruction triggered by the user based on the parameter information included in the graphical interaction interface to the controlled device through the USB interface.
312: The controlled device performs, in response to the control instruction, an adjustment corresponding to the parameter information included in the graphical interaction interface, so as to implement intelligent control on the controlled device.

In the embodiment of the present invention, by running a device control service program on an intelligent operating system, a controlling device can perform the method for intelligently controlling a device described in FIG. 3; and by implementing the method described in FIG. 3, a user does not need to perform related intelligent control on a controlled device by using an intelligent chip, a display screen, and complex keys integrated in the controlled device, and the user can perform intelligent control on the controlled device only by triggering, on an interaction device, a gesture instruction corresponding to parameter information included in a graphical interaction interface displayed on the interaction device. In this way, intelligent control on the controlled device can be performed simply, conveniently, and fast.

In addition, by implementing the method described in FIG. 3, the controlled device only needs to have a basic function actuator and does not need to be integrated with an intelligent chip, a display screen, and complex keys. In this way, the user is allowed to have a relatively low intelligent control technology threshold, which greatly reduces a barrier to a user performing intelligent control, increases actual utilization of the controlled device, and benefits promotion and popularization of the controlled device.

Further, by implementing the method described in FIG. 3, the user can trigger, by using the interaction device, a controlled terminal to perform an intelligent operation at a fixed time and independently, so that the user no longer relies on the controlled device, thus the present invention has good adaptability.

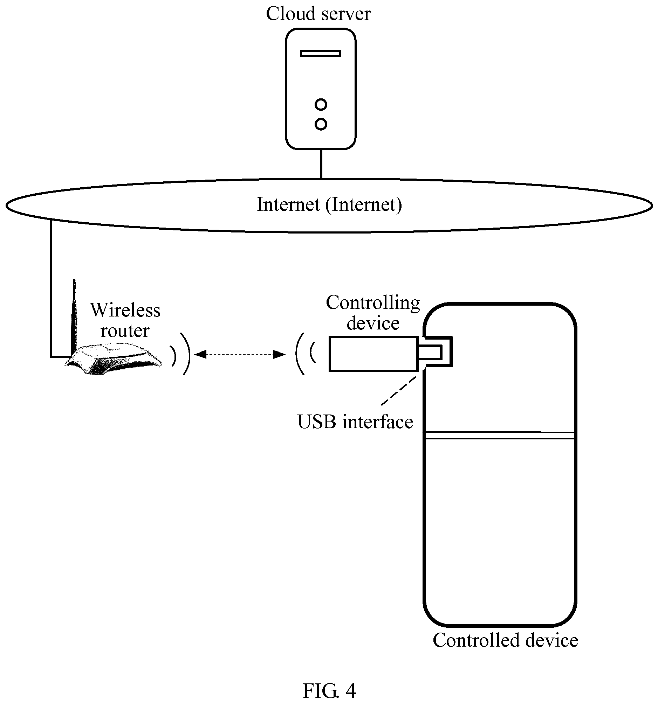

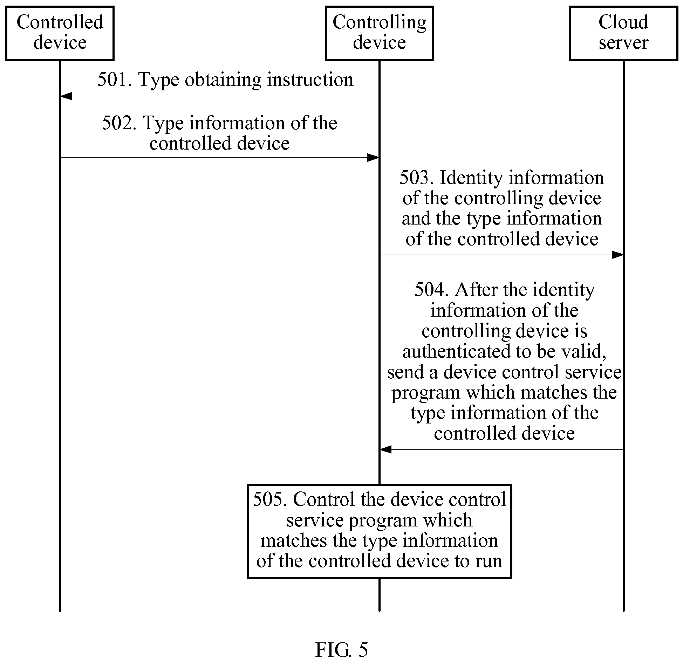

As described in the foregoing embodiment, a controlling device can perform the method for intelligently controlling a device described in FIG. 3 by running a device control service program on an intelligent operating system; correspondingly, an embodiment of the present invention further discloses a network architecture for upgrading a program. By using the network architecture for upgrading a program, a controlling device can download a device control service program from a cloud server and subsequently the controlling device can run the device control service program on an intelligent operating system, so as to perform the method for intelligently controlling a device described in FIG. 3. A schematic diagram of the network architecture for upgrading a program disclosed in the embodiment of the present invention is shown in FIG. 4, where the network architecture includes a cloud server, a controlling device, a controlled device, and a wireless router. The controlling device accesses, through a wireless manner (such as, Wi-Fi), a local area network where the wireless router is located, and the wireless router connects to the cloud server through the Internet (Internet), so as to establish a connection between the controlling device and the cloud server; in addition, the controlling device also establishes a connection to the controlled device (such as, a refrigerator) through a USB interface. A flowchart of a method for downloading a device control service program to a controlling device by using the network architecture for upgrading a program shown in FIG. 4 is shown in FIG. 5, and the method includes the following steps.
501: A controlling device sends a type acquiring instruction to a controlled device.
   The type acquiring instruction is used for instructing the controlled device to acquire type information of the controlled device.
502: The controlled device sends the type information of the controlled device to the controlling device in response to the type acquiring instruction.
   The type information of the controlled device may include information such as a device type, model information, or a device manufacturer of the controlled device.
503: The controlling device sends identity information of the controlling device and the type information of the controlled device to a cloud server.
504: After authenticating the identity information of the controlling device to be valid, the cloud server sends, to the controlling device, a device control service program matching with the type information of the controlled device.
   In an embodiment, the cloud server may send, to the controlling device in a manner of a packet, the device control service program matching with the type information of the controlled device.
   In an embodiment, after authenticating the identity information of the controlling device to be invalid, the cloud server may send an identity information authentication error message to the controlling device.
505: The controlling device controls the device control service program matching with the type information of the controlled device to run, so as to perform the method for intelligently controlling a device described in FIG. 3.

In an embodiment, after receiving the device control service program which matches with the type information of the controlled device and is sent by the cloud server, the controlling device may further install the device control service program matching with the type information of the controlled device.

By implementing the method described in FIG. 5, a controlling device can download a device control service program from a cloud server in a network architecture for upgrading a program, and can perform the method for intelligently controlling a device described in FIG. 3 by running the device control service program on an intelligent operating system, so that a user does not need to perform related intelligent control on a controlled device by using an intelligent chip, a display screen, and complex keys integrated in the controlled device, and can perform intelligent control on the controlled device only by triggering, on an interaction device, a gesture instruction corresponding to parameter information included in a graphical interaction interface displayed on the interaction device. In this way, intelligent control on the controlled device can be performed simply, conveniently, and fast.

In addition, the controlled device only needs to have a basic function actuator and does not need to be integrated with an intelligent chip, a display screen, and complex keys. In this way, the user is allowed to have a relatively low intelligent control technology threshold, which greatly reduces a barrier to a user performing intelligent control, increases actual utilization of the controlled device, and benefits promotion and popularization of the controlled device.

Further, the user can trigger, by using the interaction device, a controlled terminal to perform an intelligent operation at a fixed time and independently, so that the user no longer relies on the controlled device, thus the present invention has good adaptability.

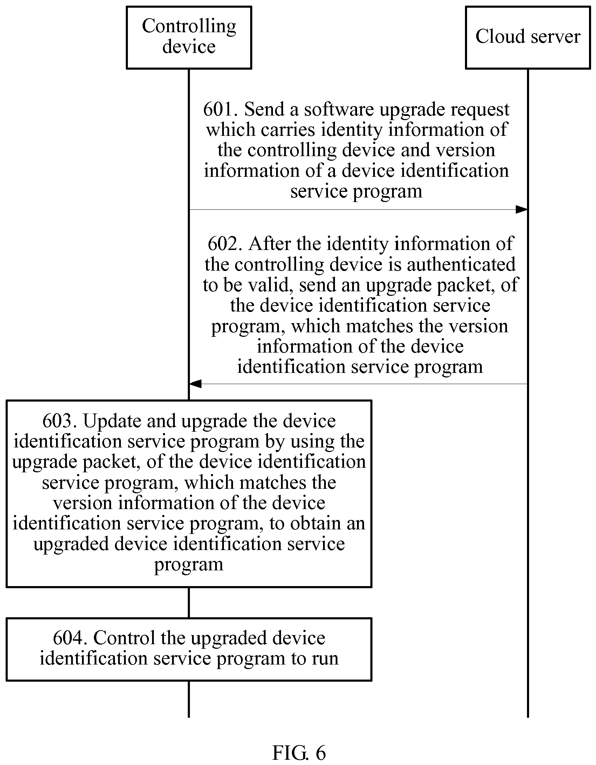

In an embodiment, before the controlling device downloads the device control service program from the cloud server in the network architecture for upgrading a program shown in FIG. 4, the controlling device may further first identify the controlled device by controlling a device identification service program to run; and after identifying the controlled device, the controlling device may start to perform the method described in FIG. 5, thereby implementing the downloading of the device control service program matching with the type information of the controlled device from the cloud server in the network architecture for upgrading a program shown in FIG. 4. Correspondingly, an embodiment of the present invention further discloses a method for updating a device identification service program to a controlling device by using the network architecture for upgrading a program shown in FIG. 4. A flowchart of the method is shown in FIG. 6, and the method includes the following steps.
601: A controlling device sends a software upgrade request which carries identity information of the controlling device and version information of a device identification service program to a cloud server.
602: After authenticating the identity information of the controlling device to be valid, the cloud server sends, to the controlling device, an upgrade packet of the device identification service program matching with the version information of the device identification service program.

In the embodiment of the present invention, after the cloud server determines through authentication that the identity information of the controlling device is valid, the cloud server may first determine whether an upgrade packet of the device identification service program matching with the version information of the device identification service program is stored, if the upgrade packet of the device identification service program matching with the version information of the device identification service program is stored, further sends, to the controlling device, the upgrade packet of the device identification service program matching with the version information of the device identification service program; or if the upgrade packet of the device identification service program matching with the version information of the device identification service program is not stored, determines that the device identification service program of the controlling device is of the latest version. In this case, the cloud server may also send, to the controlling device, a packet of the device identification service program matching with the version information of the device identification service program, as an upgrade packet of the device identification service program matching with the version information of the device identification service program.
603: After receiving the upgrade packet of the device identification service program matching with the version information of the device identification service program, the controlling device may update and upgrade the device identification service program by using the upgrade packet of the device identification service program matching with the version information of the device identification service program, to obtain an upgraded device identification service program, where the upgrade packet of the device identification service program is sent by the cloud server.
604. The controlling device controls the upgraded device identification service program to run, so as to perform the method described in FIG. 5 for downloading a device control service program to a controlling device by using the network architecture for upgrading a program shown in FIG. 4.

By implementing the method described in FIG. 6, a controlling device can update a device identification service program from a cloud server in a network architecture for upgrading a program, thereby performing the method described in FIG. 5 for downloading a device control service program to a controlling device by using the network architecture for upgrading a program shown in FIG. 4. In the embodiment of the present invention, the controlling device can effectively identify more controlled devices by updating a device identification service program, so that an interaction device can subsequently perform intelligent control on more controlled devices simply, conveniently, and fast, which extends an application range of intelligent control.

In an embodiment, before a controlling device sends, to an interaction device, a graphical interaction interface which includes parameter information of a controlled device in a current state and is in a form of a data stream for display, the controlling device and the controlled device further need to establish a communication connection. For example, after both the controlling device and the controlled device access, through Wi-Fi, a local area network where a wireless router is located, the controlling device may send a broadcast packet; in this way, after the interaction device receives the broadcast packet sent by the controlling device, the interaction device may send a connection establishment request to the controlling device; and after receiving the connection establishment request sent by the interaction device, the controlling device may send a connection completion response to the interaction device in response to the connection establishment request sent by the interaction device, so as to establish a communication connection between the controlling device and the controlled device.

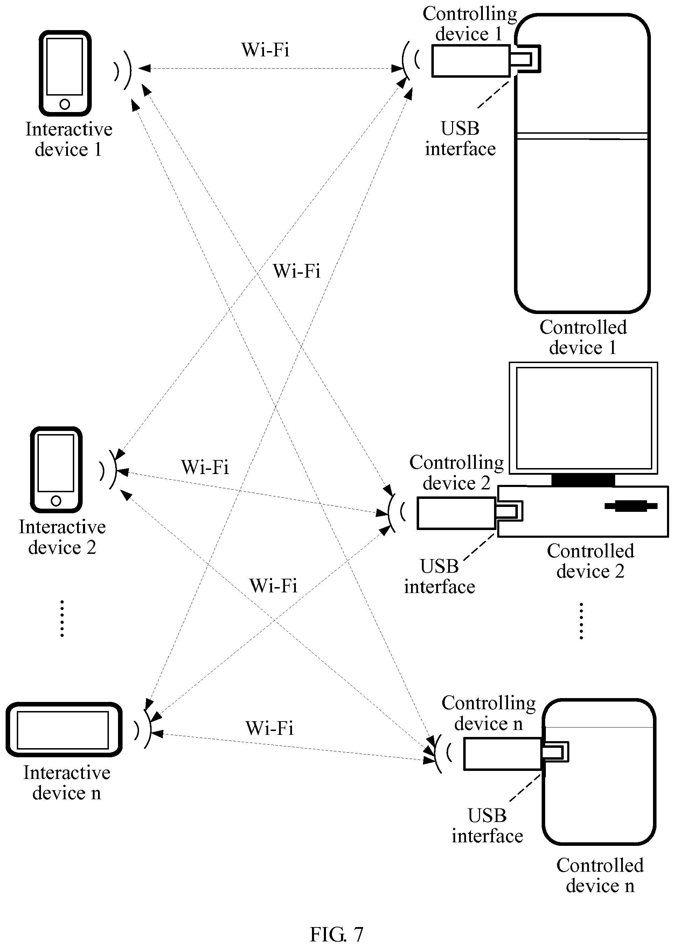

In the embodiment of the present invention, an interaction device may simultaneously establish a communication connection to one or more controlling devices through Wi-Fi, while a controlling device generally can establish a communication connection to one controlled device through a USB interface. Referring to FIG. 7, FIG. 7 is a schematic diagram of a network architecture for a communication connection according to an embodiment of the present invention. In the network architecture for a communication connection shown in FIG. 7, controlling device 1 may establish a communication connection to controlled device 1 through a USB interface, controlling device 2 may establish a communication connection to controlled device 2 through a USB interface, ..., the rest can be deduced by analogy, and controlling device n may establish a communication connection to controlled device n through a USB interface; while interaction device 1 may simultaneously establish a communication connection to one or more controlling devices of controlling device 1 to controlling device n through a wireless network (such as, Wi-Fi), interaction device 2 may also simultaneously establish a communication connection to one or more controlling devices from controlling device 1 to controlling device n through Wi-Fi, ..., the rest can be deduced by analogy, and interaction device n may also simultaneously establish a communication connection to one or more controlling devices of controlling device 1 to controlling device n through Wi-Fi. In the network architecture for a communication connection shown in FIG. 7, because the controlling devices and the controlled devices may each have a USB interface, a controlling device may also establish a communication connection to any one of the controlled devices through a USB interface while an interaction device may also establish a communication connection to any one of the controlling devices through Wi-Fi. Therefore, the controlling devices, the controlled devices, and the interaction devices can freely form a system for intelligently controlling a device, and a user can perform flexible and diversified intelligent control on a same controlled device or different controlled devices by using different interaction devices.

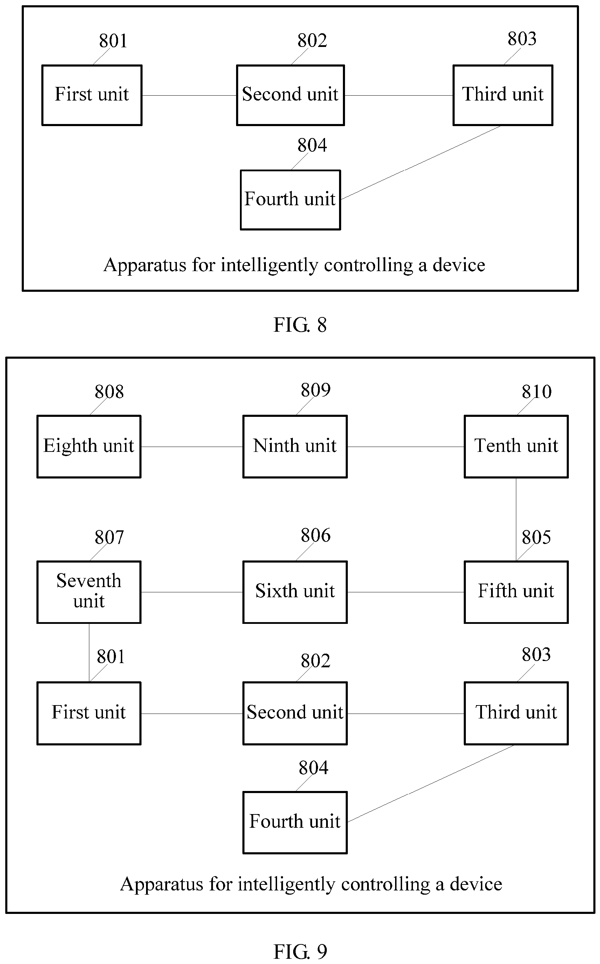

Referring to FIG. 8, FIG. 8 is a structural diagram of an apparatus for intelligently controlling a device according to an embodiment of the present invention, where the apparatus is configured to implement the method for intelligently controlling a device disclosed in the embodiments of the present invention. It should be noted that in the embodiment of the present invention, the apparatus for intelligently controlling a device shown in FIG. 8 may be used as an independent device to perform the method for intelligently controlling a device disclosed in the embodiments of the present invention, or may also be used as a newly added part of a controlling device to perform the method for intelligently controlling a device disclosed in the embodiments of the present invention. When the apparatus for intelligently controlling a device shown in FIG. 8 is used as an independent device or a newly added part of a controlling device to perform the method for intelligently controlling a device disclosed in the embodiments of the present invention, the apparatus for intelligently controlling a device shown in FIG. 8 not only can establish a communication connection to a controlled device (such as, establishing a communication connection through a USB interface), but also can establish a communication connection to an interaction device (such as, establishing a communication connection to an interaction device through Wi-Fi).

In another implementation manner, the apparatus for intelligently controlling a device shown in FIG. 8 may also be a network element device having a function for intelligently controlling a device disclosed in the embodiments of the present invention, where a product form of the network element device may be a home partner device, a router, a gateway device, a network firewall device, a GGSN, a PDSN, or the like. It should be understood that the apparatus for intelligently controlling a device disclosed in the embodiment of the present invention supports being independent and built externally, can interconnect to an existing device, or may also be built inside a network element device of a live network in a manner of a plug-in card or software integration.

As shown in FIG. 8, the apparatus for intelligently controlling a device disclosed in the embodiment of the present invention includes:
a first unit 801, configured to acquire parameter information of a controlled device in a current state, where the parameter information is used for reflecting a current running state of the controlled device;
a second unit 802, configured to generate a graphical interaction interface including the parameter information acquired by the first unit 801;
a third unit 803, configured to send the graphical interaction interface which is generated by the second unit 803 and is in a form of a data stream to an interaction device for display; and
a fourth unit 804, configured to receive an input event sent by the interaction device, where the input event is triggered by a user based on the parameter information displayed on the graphical interaction interface of the interaction device; and parse the input event to obtain a control instruction corresponding to the parameter information included in the graphical interaction interface.

The third unit 803 is further configured to send the control instruction obtained by the fourth unit 804 to the controlled device, so that the controlled device performs, in response to the control instruction, a control operation corresponding to the current running state of the controlled device, where the performing a control operation corresponding to the current running state of the controlled device includes performing an adjustment corresponding to the parameter information included in the graphical interaction interface, thereby implementing intelligent control on the controlled device.

In the embodiment of the present invention, a manner for the fourth unit 804 to parse the input event to obtain the control instruction corresponding to the parameter information included in the graphical interaction interface is specifically as follows:
the fourth unit 804 converts the input event into an input event matching with the graphical interaction interface generated by the controlling device, and parses the input event obtained through conversion to obtain the control instruction corresponding to the parameter information included in the graphical interaction interface.

In the embodiment of the present invention, the fourth unit 804 may receive a gesture which is triggered by the user based on the parameter information included in the graphical interaction interface and is sent by the interaction device, and parse the gesture, to obtain the control instruction corresponding to the parameter information included in the graphical interaction interface.

By using the apparatus for intelligently controlling a device shown in FIG. 8, a user does not need to perform related intelligent control on a controlled device by using an intelligent chip, a display screen, and complex keys integrated in the controlled device; and the user can perform intelligent control on the controlled device only by triggering, on an interaction device, a gesture instruction corresponding to parameter information included in a graphical interaction interface displayed on the interaction device. In this way, intelligent control on the controlled device can be performed simply, conveniently, and fast.

In addition, by using the apparatus for intelligently controlling a device shown in FIG. 8, the controlled device only needs to have a basic function actuator and does not need to be integrated with an intelligent chip, a display screen, and complex keys. In this way, the user is allowed to have a relatively low intelligent control technology threshold, which greatly reduces a barrier to a user performing intelligent control, increases actual utilization of the controlled device, and benefits promotion and popularization of the controlled device.

Further, by using the apparatus for intelligently controlling a device shown in FIG. 8, the user can trigger, by using the interaction device, a controlled terminal to perform an intelligent operation at a fixed time and independently, so that the user no longer relies on the controlled device, thus the present invention has good adaptability.

Also referring to FIG. 9. FIG. 9 is a structural diagram of another apparatus for intelligently controlling a device according to an embodiment of the present invention, where the apparatus is configured to implement the method for intelligently controlling a device disclosed in the embodiments of the present invention. The apparatus for intelligently controlling a device shown in FIG. 9 is obtained by optimizing the apparatus for intelligently controlling a device shown in FIG. 8. Besides the units included in the apparatus for intelligently controlling a device shown in FIG. 8, the apparatus for intelligently controlling a device shown in FIG. 9 may further include:
a fifth unit 805, configured to send a type acquiring instruction to the controlled device, and receive type information of the controlled device which is sent by the controlled device in response to the type acquiring instruction;
a sixth unit 806, configured to send, to a cloud server, identity information of the local end and the type information of the controlled device which is received by the fifth unit 805, and receive a device control service program, which matches with the type information of the controlled device and is sent by the cloud server after the cloud server authenticates the identity information of the local end to be valid, where the device control service program is used to control a device through performing; and
a seventh unit 807, configured to control the device control service program which matches with the type information of the controlled device and is received by the sixth unit 806 to run, so as to trigger the first unit 801 to perform the operation of acquiring the parameter information of the controlled device in the current state.

In an embodiment, the apparatus for intelligently controlling a device shown in FIG. 9 further includes:
an eighth unit 808, configured to send a software upgrade request which carries the identity information of the local end and version information of a device identification service program to the cloud server, and receive an upgrade packet of the device identification service program matching with the version information of the device identification service program, where the upgrade packet of the device identification service program is sent by the cloud server after the cloud server authenticates the identity information of the local end to be valid;
a ninth unit 809, configured to update and upgrade the device identification service program by using the upgrade packet of the device identification service program matching with the version information of the device identification service program, to obtain an upgraded device identification service program, where the device identification service program is used to identify a device type through performing, and the upgrade packet of the device identification service program is received by the eighth unit 808; and
a tenth unit 810, configured to control the upgraded device identification service program obtained by the ninth unit 809 to run, so as to trigger the fifth unit 805 to perform the operation of sending the type acquiring instruction to the controlled device.

In an embodiment, in the apparatus for intelligently controlling a device shown in FIG. 8 or FIG. 9, the third unit 803 is further configured to receive a connection establishment request sent by the interaction device, and send a connection completion response corresponding to the connection establishment request to the interaction device in response to the connection establishment request sent by the interaction device, so as to establish a communication connection between the apparatus for intelligently controlling a device and the interaction device.

In an embodiment, in the apparatus for intelligently controlling a device shown in FIG. 8 or FIG. 9, the first unit 801 is configured to send a parameter information query instruction to the controlled device, and receive the parameter information of the controlled device in the current state which is sent by the controlled device in response to the parameter information query instruction, so as to obtain the parameter information of the controlled device in the current state.

In an embodiment, in the apparatus for intelligently controlling a device shown in FIG. 8 or FIG. 9, a specific manner for the third unit 803 to send the graphical interaction interface in the form of a data stream to the interaction device for display is as follows:
the third unit 803 is configured to encode the graphical interaction interface into a video stream of a graphical interaction interface, and send the video stream of the graphical interaction interface to the interaction device, so that the interaction device decodes the video stream of the graphical interaction interface after receiving the video stream of the graphical interaction interface, renders, for display, the video stream of the decoded graphical interaction interface into the graphical interaction interface including the parameter information of the controlled device in the current state.

By using the apparatus for intelligently controlling a device shown in FIG. 9, a user does not need to perform related intelligent control on a controlled device by using an intelligent chip, a display screen, and complex keys integrated in the controlled device; and the user can perform intelligent control on the controlled device only by triggering, on an interaction device, a gesture instruction corresponding to parameter information included in a graphical interaction interface displayed on the interaction device. In this way, intelligent control on the controlled device can be performed simply, conveniently, and fast.

In addition, by using the apparatus for intelligently controlling a device shown in FIG. 9, the controlled device only needs to have a basic function actuator and does not need to be integrated with an intelligent chip, a display screen, and complex keys. In this way, the user is allowed to have a relatively low intelligent control technology threshold, which greatly reduces a barrier to a user performing intelligent control, increases actual utilization of the controlled device, and benefits promotion and popularization of the controlled device.

Further, by using the apparatus for intelligently controlling a device shown in FIG. 9, the user can trigger, by using the interaction device, a controlled terminal to perform an intelligent operation at a fixed time and independently, so that the user no longer relies on the controlled device, thus the present invention has good adaptability.

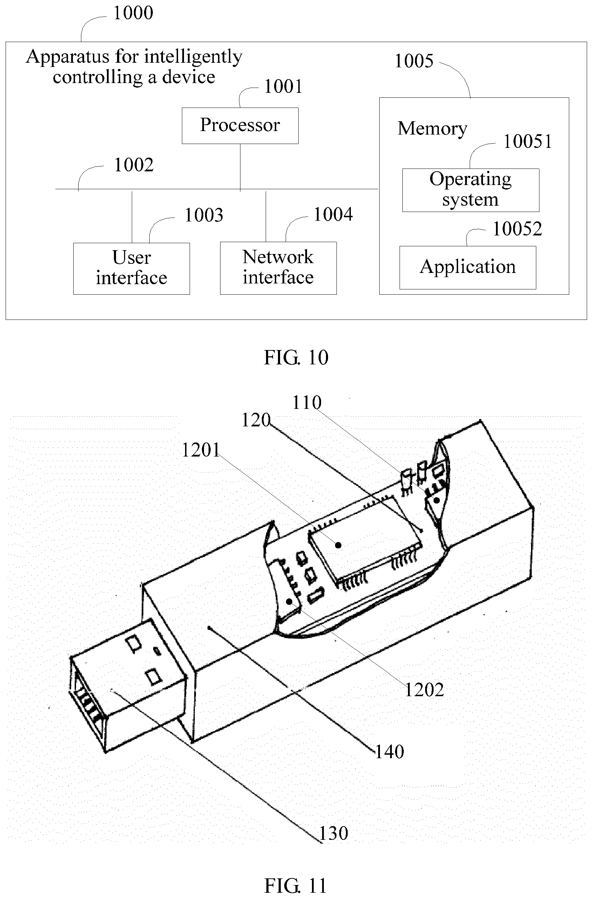

Referring to FIG. 10, FIG. 10 is a structural diagram of another apparatus for intelligently controlling a device according to an embodiment of the present invention, where the apparatus is configured to perform the method for intelligently controlling a device disclosed in the embodiments of the present invention. As shown in FIG. 10, the apparatus for intelligently controlling a device 1000 includes at least one processor 1001, such as, a CPU, at least one network interface 1004 or another interaction interface 1003, a memory 1005, and at least one communication bus 1002. The communication bus 1002 is configured to implement connection communication between these components. The interaction interface 1003 may optionally include but is not limited to a USB interface or another standard interface or wired interface. The network interface 1004 may optionally include a Wi-Fi interface or another wireless interface. The memory 1005 may include a high-speed RAM memory, or may further include a non-volatile memory (non-volatile memory), such as, at least one disk memory. The memory 1005 may optionally include at least one storage apparatus located far away from the processor 1001.

In some implementation manners, the memory 1005 stores the following elements, an executable module, or a data structure, a subset of the following elements, the executable module, and the data structure, or an extension set of the following elements, the executable module, and the data structure:
an operating system 10051, including various system programs which are used for implementing various basic services and processing a task based on hardware; and
an application 10052, including various applications such as a device control service program and a device identification service program which are used for implementing various application services.

Specifically, the processor 1001 is configured to invoke a program stored in the memory 1005 to perform the following operations:
acquiring parameter information of a controlled device in a current state, where the parameter information is used for reflecting a current running state of the controlled device;
generating a graphical interaction interface including the parameter information of the controlled device in the current state, and sending the graphical interaction interface in a form of a data stream to an interaction device for display;
receiving an input event sent by the interaction device, where the input event is triggered by a user based on the parameter information displayed on the graphical interaction interface of the interaction device;
parsing the input event to obtain a control instruction corresponding to the parameter information included in the graphical interaction interface; and
sending the control instruction to the controlled device, so that the controlled device performs, in response to the control instruction, a control operation corresponding to the current running state of the controlled device, where the performing a control operation corresponding to the current running state of the controlled device includes performing an adjustment corresponding to the parameter information included in the graphical interaction interface.

In an embodiment, a manner for the processor 1001 to parse the input event to obtain the control instruction corresponding to the parameter information included in the graphical interaction interface is specifically as follows:
the processor 1001 converts the input event into an input event matching with the graphical interaction interface generated by the controlling device, and parses the input event obtained through conversion to obtain the control instruction corresponding to the parameter information included in the graphical interaction interface.

In an embodiment, before acquiring the parameter information of the controlled device in the current state, the processor 1001 may also perform the following operations:
sending a type acquiring instruction to the controlled device, and receiving type information of the controlled device which is sent by the controlled device in response to the type acquiring instruction;
sending identity information of the local end (that is, the apparatus for intelligently controlling a device) and the type information of the controlled device to a cloud server, and receiving a device control service program, which matches with the type information of the controlled device and is sent by the cloud server after the cloud server authenticates the identity information of the local end to be valid; and
controlling the device control service program matching with the type information of the controlled device to run, so as to trigger performing of the step of acquiring parameter information of a controlled device in a current state.

In an embodiment, before sending the type acquiring instruction to the controlled device, the processor 1001 may also perform the following operations:
sending a software upgrade request which carries the identity information of the local end and version information of a device identification service program to the cloud server, and receiving an upgrade packet of the device identification service program matching with the version information of the device identification service program, where the upgrade packet of the device identification service program is sent by the cloud server after the cloud server authenticates the identity information of the local end to be valid;
updating and upgrading the device identification service program by using the upgrade packet of the device identification service program matching with the version information of the device identification service program, to obtain an upgraded device identification service program; and
controlling the upgraded device identification service program to run, so as to trigger performing of the step of sending a type acquiring instruction to the controlled device.

In an embodiment, before sending the graphical interaction interface in the form of a data stream to the interaction device for display, the processor 1001 also performs the following operations:
receiving a connection establishment request sent by the interaction device, and sending a connection completion response corresponding to the connection establishment request to the interaction device in response to the connection establishment request sent by the interaction device.

In an embodiment, the acquiring, by the processor 1001, parameter information of a controlled device in a current state includes:
sending, by the processor 1001, a parameter information query instruction to the controlled device, and receiving the parameter information of the controlled device in the current state which is sent by the controlled device in response to the parameter information query instruction.

In an embodiment, the sending, by the processor 1001, the graphical interaction interface in a form of a data stream to an interaction device for display includes:
encoding, by the processor 1001, the graphical interaction interface into a video stream of the graphical interaction interface, and sending the video stream of the graphical interaction interface to the interaction device, so that the interaction device decodes the video stream of the graphical interaction interface after receiving the video stream of the graphical interaction interface, renders the decoded video stream of the graphical interaction interface into the graphical interaction interface for display.

By using the apparatus for intelligently controlling a device shown in FIG. 10, a user does not need to perform related intelligent control on a controlled device by using an intelligent chip, a display screen, and complex keys integrated in the controlled device; and the user can perform intelligent control on the controlled device only by triggering, on an interaction device, a gesture instruction corresponding to parameter information included in a graphical interaction interface displayed on the interaction device. In this way, intelligent control on the controlled device can be performed simply, conveniently, and fast.

In addition, by using the apparatus for intelligently controlling a device shown in FIG. 10, the controlled device only needs to have a basic function actuator and does not need to be integrated with an intelligent chip, a display screen, and complex keys. In this way, the user is allowed to have a relatively low intelligent control technology threshold, which greatly reduces a barrier to a user performing intelligent control, increases actual utilization of the controlled device, and benefits promotion and popularization of the controlled device.

Further, by using the apparatus for intelligently controlling a device shown in FIG. 10, the user can trigger, by using the interaction device, a controlled terminal to perform an intelligent operation at a fixed time and independently, so that the user no longer relies on the controlled device, thus the present invention has good adaptability.

Referring to FIG. 11, FIG. 11 is a structural diagram of a plug-and-play device according to an embodiment of the present invention. As shown in FIG. 11, the plug-and-play device includes a radio frequency module 110, a circuit board 120, and a universal serial bus interface module 130, where a microcontroller 1201 and a memory 1202 are disposed on the circuit board 120, the radio frequency module 110 and the universal serial bus interface module 130 are each in a communication connection to the microcontroller 1201 through a circuit, the microcontroller 1201 is in a communication connection to the memory 1202 through a circuit, and the circuit board 120 and the radio frequency module 110 are completely accommodated in a single casing 140;
the memory 1202 is configured to store a program instruction, where the program instruction is used for performing intelligent control on a controlled device;
the microcontroller 1201 is configured to invoke a program instruction stored in the memory 1202 to perform the following operations:
acquiring parameter information of the controlled device in a current state by using the universal serial bus interface module 130, where the parameter information is used for reflecting a current running state of the controlled device; generating a graphical interaction interface including the parameter information, and sending, by using the radio frequency module 110, the graphical interaction interface in a form of a data stream to an interaction device for display; receiving, by using the radio frequency module 110, an input event sent by the interaction device, where the input event is triggered by a user based on the parameter information displayed on the graphical interaction interface of the interaction device; parsing the input event to obtain a control instruction corresponding to the parameter information included in the graphical interaction interface; and sending the control instruction to the controlled device by using the universal serial bus interface module 130, so that the controlled device performs, in response to the control instruction, a control operation corresponding to the current running state of the controlled device, where the performing a control operation corresponding to the current running state of the controlled device includes performing an adjustment corresponding to the parameter information included in the graphical interaction interface.

In an embodiment, in the parsing, by the microcontroller 1201, the input event to obtain the control instruction corresponding to the parameter information included in the graphical interaction interface,
the microcontroller 1201 is specifically configured to convert the input event into an input event matching with the generated graphical interaction interface, and parse the input event obtained through conversion to obtain the control instruction corresponding to the parameter information included in the graphical interaction interface.

In an embodiment, the microcontroller 1201 is further configured to send a type acquiring instruction to the controlled device by using the universal serial bus interface module 130, and receive type information of the controlled device which is sent by the controlled device in response to the type acquiring instruction by using the universal serial bus interface module 130; send identity information of the local device (that is, the plug-and-play device) and the type information of the controlled device to a cloud server by using the radio frequency module 110, and receive, by using the radio frequency module 110, a device control service program, which matches with the type information of the controlled device and is sent by the cloud server after the cloud server authenticates the identity information of the local device to be valid; and control the device control service program matching with the type information of the controlled device to run, so as to trigger performing of the step of acquiring, by using the universal serial bus interface module 130, the parameter information of the controlled device in the current state.

In an embodiment, the microcontroller 1201 is further configured to send, by using the radio frequency module 110, a software upgrade request which carries the identity information of the local device and version information of a device identification service program to the cloud server, and receive, by using the radio frequency module 110, an upgrade packet of the device identification service program matching with the version information of the device identification service program, where the upgrade packet of the device identification service program is sent by the cloud server after the cloud server authenticates the identity information of the local device to be valid; update and upgrade the device identification service program by using the upgrade packet of the device identification service program matching with the version information of the device identification service program, to obtain an upgraded device identification service program; and control the upgraded device identification service program to run, so as to trigger performing of the step of sending, by using the universal serial bus interface module 130, the type acquiring instruction to the controlled device.

In an embodiment, the microcontroller 1201 is further configured to receive, by using the radio frequency module 110, a connection establishment request sent by the interaction device, and send, by using the radio frequency module 110, a connection completion response corresponding to the connection establishment request to the interaction device in response to the connection establishment request sent by the interaction device.

In an embodiment, in the acquiring, by the microcontroller 1201, parameter information of the controlled device in a current state by using the universal serial bus interface module 130,
the microcontroller 1201 is specifically configured to send a parameter information query instruction to the controlled device by using the universal serial bus interface module 130, and receive, by using the universal serial bus interface module 130, the parameter information of the controlled device in the current state which is sent by the controlled device in response to the parameter information query instruction.

In an embodiment, in the sending, by the microcontroller 1201 by using the radio frequency module 110, the graphical interaction interface in a form of a data stream to an interaction device for display,
the microcontroller 1201 is specifically configured to encode the graphical interaction interface into a video stream of the graphical interaction interface, and send the video stream of the graphical interaction interface to the interaction device by using the radio frequency module 110, so that the interaction device decodes the video stream of the graphical interaction interface after receiving the video stream of the graphical interaction interface, renders the decoded video stream of the graphical interaction interface into the graphical interaction interface for display.

By using the plug-and-play device shown in FIG. 11, a user does not need to perform related intelligent control on a controlled device by using an intelligent chip, a display screen, and complex keys integrated in the controlled device; and the user can perform intelligent control on the controlled device only by triggering, on an interaction device, a gesture instruction corresponding to parameter information included in a graphical interaction interface displayed on the interaction device. In this way, intelligent control on the controlled device can be performed simply, conveniently, and fast.

In addition, by using the plug-and-play device shown in FIG. 11, the controlled device only needs to have a basic function actuator and does not need to be integrated with an intelligent chip, a display screen, and complex keys. In this way, the user is allowed to have a relatively low intelligent control technology threshold, which greatly reduces a barrier to a user performing intelligent control, increases actual utilization of the controlled device, and benefits promotion and popularization of the controlled device.

Further, by using the plug-and-play device shown in FIG. 11, the user can trigger, by using the interaction device, a controlled terminal to perform an intelligent operation at a fixed time and independently, so that the user no longer relies on the controlled device, thus the present invention has good adaptability.

It should be noted that the plug-and-play device mentioned in the embodiment of the present invention may also be called as a controlling device or an apparatus for intelligently controlling a device; and in an implementation manner, a controlling device or an apparatus for intelligently controlling a device is the plug-and-play device mentioned in the embodiment of the present invention.

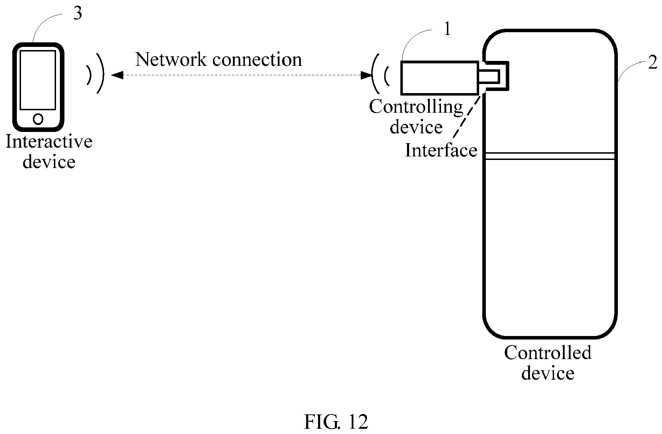

Referring to FIG. 12, FIG. 12 is a structural diagram of a system for intelligently controlling a device according to an embodiment of the present invention, where the system is configured to perform the method for intelligently controlling a device disclosed in the embodiments of the present invention. As shown in FIG. 12, the system for intelligently controlling a device includes a controlling device 1, a controlled device 2, and an interaction device 3. In an implementation manner, the controlling device 1 may establish a communication connection to the controlled device 2 through an interface (such as, a USB interface), and the controlling device 1 may establish a communication connection to the interaction device 3 through a network connection (which includes but is not limited to a wireless connection or a wired connection, such as, Wi-Fi), where:
the controlling device 1 is configured to acquire parameter information of the controlled device 2 in a current state, where the parameter information is used for reflecting a current running state of the controlled device 2; generate a graphical interaction interface including the parameter information of the controlled device 2 in the current state; send the graphical interaction interface in a form of a data stream to the interaction device 3 for display; receive an input event (such as, a gesture) sent by the interaction device 3, where the input event is triggered by a user based on the parameter information displayed on the graphical interaction interface of the interaction device 3; parse the input event to obtain a control instruction corresponding to the parameter information included in the graphical interaction interface; and send the control instruction to the controlled device 2;
the controlled device 2 is configured to perform, in response to the control instruction, a control operation corresponding to the current running state of the controlled device 2, where the performing a control operation corresponding to the current running state of the controlled device 2 includes performing an adjustment corresponding to the parameter information included in the graphical interaction interface; and
the interaction device 3 is configured to receive and display the graphical interaction interface which includes the parameter information of the controlled device 2 in the current state and is sent by the controlling device 1, and send, to the controlling device 1, the input event (such as, the gesture) triggered by the user based on the parameter information displayed on the graphical interaction interface of the interaction device 3.

In an embodiment, a manner for the controlling device 1 to parse the input event to obtain the control instruction corresponding to the parameter information included in the graphical interaction interface is specifically as follows:
the controlling device 1 is configured to convert the input event into an input event matching with the graphical interaction interface generated by the controlling device 1, and parse the input event obtained through conversion to obtain the control instruction corresponding to the parameter information included in the graphical interaction interface.

In an embodiment, the system for intelligently controlling a device shown in FIG. 12 further includes a cloud server 4, where:
the controlling device 1 is further configured to send a type acquiring instruction to the controlled device 2, receive type information of the controlled device 2 which is sent by the controlled device 2 in response to the type acquiring instruction, and send identity information of the controlling device 1 and the type information of the controlled device 2 to the cloud server 4;
the cloud server 4 is configured to receive the identity information of the controlling device 1 and the type information of the controlled device 2 which are sent by the controlling device 1, and send a device control service program matching with the type information of the controlled device 2 to the controlling device 1 after authenticating the identity information of the controlling device 1 to be valid;
correspondingly, the controlling device 1 is further configured to receive and control the device control service program matching with the type information of the controlled device 2 to run, so as to trigger performing of the operation of acquiring the parameter information of the controlled device 2 in the current state; and
correspondingly, the controlled device 2 is further configured to receive the type acquiring instruction sent by the controlling device 1, and send the type information of the controlled device 2 to the controlling device 1 in response to the type acquiring instruction.

In an embodiment, in the system for intelligently controlling a device shown in FIG. 12, the controlling device 1 is further configured to send a software upgrade request which carries identity information of the controlling device 1 and version information of a device identification service program to the cloud server 4, and receive an upgrade packet of the device identification service program matching with the version information of the device identification service program, where the upgrade packet of the device identification service program is sent by the cloud server 4 after the cloud server 4 authenticates the identity information of the controlling device 1 to be valid; update and upgrade the device identification service program by using the upgrade packet of the device identification service program matching with the version information of the device identification service program, to obtain an upgraded device identification service program; and control the upgraded device identification service program to run, so as to trigger performing of the operation of sending the type acquiring instruction to the controlled device 2; and
correspondingly, the cloud server 4 is further configured to receive the software upgrade request which carries the identity information of the controlling device 1 and the version information of the device identification service program and is sent by the controlling device 1, and send, to the controlling device 1, the upgrade packet of the device identification service program matching with the version information of the device identification service program after authenticating the identity information of the controlling device 1 to be valid.

In an embodiment, in the system for intelligently controlling a device shown in FIG. 12, the controlling device 1 is further configured to receive a connection establishment request sent by the interaction device 3 and send a connection completion response corresponding to the connection establishment request to the interaction device 3 in response to the connection establishment request sent by the interaction device 3; and
correspondingly, the interaction device 3 is further configured to send the connection establishment request to the controlling device 1 and receive the connection completion response, which is sent by the controlling device 1 in response to the connection establishment request, so as to establish a communication connection between the controlling device 1 and the interaction device 3.

In an embodiment, in the system for intelligently controlling a device shown in FIG. 12, a specific manner for the controlling device 1 to acquire the parameter information of the controlled device in the current state is as follows:
the controlling device 1 is configured to send a parameter information query instruction to the controlled device 2, and receive the parameter information of the controlled device in the current state which is sent by the controlled device 2 in response to the parameter information query instruction; and
correspondingly, the controlled device 2 is further configured to receive the parameter information query instruction sent by the controlling device 1, and send the parameter information of the controlled device in the current state to the controlling device 1 in response to the parameter information query instruction.

In an embodiment, in the system for intelligently controlling a device shown in FIG. 12, a specific manner for the controlling device 1 to send the graphical interaction interface in the form of a data stream to the interaction device 3 for display is as follows:
that the controlling device 1 is configured to encode the graphical interaction interface into a video stream of the graphical interaction interface, and send the video stream of the graphical interaction interface to the interaction device 3; and
the interaction device 3 is configured to receive the video stream of the graphical interaction interface sent by the controlling device 1, decode the video stream of the graphical interaction interface, render, for display, the decoded video stream of the graphical interaction interface into the graphical interaction interface including the parameter information of the controlled device 2 in the current state.

In the system for intelligently controlling a device shown in FIG. 12, a user does not need to perform related intelligent control on a controlled device by using an intelligent chip, a display screen, and complex keys integrated in the controlled device; and the user can perform intelligent control on the controlled device only by triggering, on an interaction device, a gesture instruction corresponding to parameter information included in a graphical interaction interface displayed on the interaction device. In this way, intelligent control on the controlled device can be performed simply, conveniently, and fast.

In addition, in the system for intelligently controlling a device shown in FIG. 12, the controlled device only needs to have a basic function actuator and does not need to be integrated with an intelligent chip, a display screen, and complex keys. In this way, a user is allowed to have a relatively low intelligent control technology threshold, which greatly reduces a barrier to a user performing intelligent control, increases actual utilization of the controlled device, and benefits promotion and popularization of the controlled device.

Further, in the system for intelligently controlling a device shown in FIG. 12, the user can trigger, by using the interaction device, a controlled terminal to perform an intelligent operation at a fixed time and independently, so that the user no longer relies on the controlled device, thus the present invention has good adaptability.

An embodiment of the present invention further discloses a computer storage medium. The computer storage medium stores a computer program, and when the computer program in the computer storage medium is read into a computer, the computer can complete all the steps of the method for intelligently controlling a device disclosed in the embodiments of the present invention.

The embodiments of the present invention further have the following beneficial effects:
1. The embodiments of the present invention put forward a method between direct intelligence and indirect intelligence, where a controlling device is adapted to control a controlled device through an interface (such as, a USB interface), and an interaction device such as a mobile phone or a tablet computer is adapted to control the controlling device, thereby indirectly implementing control on the controlled device; in other words, intelligent control on a controlled device can be indirectly implemented by using a low-cost controlling device and by making full use of an existing interaction device. The technical solutions disclosed in the embodiments of the present invention are easy to be implemented and have strong compatibility because an ordinary controlled device is transformed to a small extent, and therefore have a relatively low total cost and are easy to be promoted and popularized.
2. Being small, exquisite and portable to be conveniently used between different ordinary devices in a plug-and-play manner, a controlling device can support various controlled devices and has advantages of plug-and-play and mobility, and is not bound with a controlled device. In addition, an application of a controlling device can be conveniently installed and upgraded by using a cloud server. Therefore, extensibility is relatively good.
3. After a task is assigned to a controlling device by using an interaction device, the task can be run at a fixed time and independently, so that the user no longer relies on the controlled device, thus the present invention has good adaptability.

A person of ordinary skill in the art may understand that all or a part of the steps of the methods in the embodiments may be implemented by a program instructing relevant hardware (such as a processor). The program may be stored in a computer readable storage medium. The storage medium may include: a flash memory, a read-only memory (Read-Only Memory, ROM), a random access memory (Random Access Memory, RAM), a magnetic disk, or an optical disc.

The method, the apparatus, and the system for intelligently controlling a device disclosed in the embodiments of the present invention are introduced above in detail, and the principle and implementation manners of the present invention are described herein by using specific examples. The above descriptions of the embodiments are merely for understanding the method and core ideas of the present invention. Meanwhile, a person of ordinary skill in the art may make modifications to the specific implementation manners and application ranges according to the idea of the present invention. In conclusion, the content of the specification shall not be regarded as a limitation to the present invention.

## Claims

1. A method for intelligently controlling a device, comprising:
acquiring (101), by a portable controlling device, parameter information of a controlled device in a current state, wherein the parameter information is used for reflecting a current running state of the controlled device;
generating (102), by the portable controlling device, a graphical interaction interface comprising the parameter information, and sending (103) the graphical interaction interface in a form of a data stream to an interaction device for display;
receiving (104), by the portable controlling device, an input event sent by the interaction device, wherein the input event is triggered by a user based on the parameter information displayed on the graphical interaction interface of the interaction device;
parsing (104), by the portable controlling device, the input event to obtain a control instruction corresponding to the parameter information comprised in the graphical interaction interface; and
sending (105), by the portable controlling device, the control instruction to the controlled device, so that the controlled device performs, in response to the control instruction, a control operation corresponding to the current running state of the controlled device, wherein the performing a control operation corresponding to the current running state of the controlled device comprises performing an adjustment corresponding to the parameter information comprised in the graphical interaction interface;
wherein the portable controlling device is a plug-and-play device, and the portable controlling device is adapted to control the controlled device through an interface; and
wherein before the acquiring (101), by the portable controlling device, parameter information of a controlled device in a current state, the method further comprises:
sending (501), by the portable controlling device, a type acquiring instruction to the controlled device, and receiving (502) type information of the controlled device which is sent by the controlled device in response to the type acquiring instruction, the type information of the controlled device include a device type, model information, or a device manufacturer of the controlled device;
sending (503), by the portable controlling device, identity information of the portable controlling device and the type information of the controlled device to a cloud server, and receiving (504) a device control service program, which matches with the type information of the controlled device and is sent by the cloud server after the cloud server determines through authentication that the identity information of the portable controlling device is valid; and
controlling (505), by the portable controlling device, the device control service program matching with the type information of the controlled device to run on the portable controlling device, so as to trigger performing of the step of acquiring parameter information of a controlled device in a current state.

2. The method according to claim 1, wherein the parsing, by the portable controlling device, the input event to obtain a control instruction corresponding to the parameter information comprised in the graphical interaction interface comprises:
converting, by the portable controlling device, the input event into an input event matching with the graphical interaction interface generated by the portable controlling device, and parsing the input event obtained through conversion to obtain the control instruction corresponding to the parameter information comprised in the graphical interaction interface.

3. The method according to claim 1, wherein before the sending (501), by the portable controlling device, a type acquiring instruction to the controlled device, the method further comprises:
sending (601), by the portable controlling device, a software upgrade request which carries the identity information of the portable controlling device and version information of a device identification service program to the cloud server, and receiving (602) an upgrade packet of the device identification service program matching with the version information of the device identification service program, wherein the upgrade packet of the device identification service program is sent by the cloud server after the cloud server determines through authentication that the identity information of the portable controlling device is valid;
updating and upgrading (603), by the portable controlling device, the device identification service program by using the upgrade packet of the device identification service program matching with the version information of the device identification service program, to obtain an upgraded device identification service program; and
controlling (604), by the portable controlling device, the upgraded device identification service program to run, so as to trigger performing of the step of sending a type acquiring instruction to the controlled device.

4. The method according to claim 1, 2, or 3, wherein before the sending, by the portable controlling device, the graphical interaction interface in a form of a data stream to an interaction device for display, the method further comprises:
receiving, by the portable controlling device, a connection establishment request sent by the interaction device, and sending a connection completion response corresponding to the connection establishment request to the interaction device in response to the connection establishment request sent by the interaction device.

5. The method according to any one of claims 1 to 4, wherein the acquiring, by a portable controlling device, parameter information of a controlled device in a current state comprises:
sending (301), by the portable controlling device, a parameter information query instruction to the controlled device, and receiving (303) the parameter information of the controlled device in the current state which is sent by the controlled device in response to the parameter information query instruction.

6. The method according to any one of claims 1 to 5, wherein the sending, by the portable controlling device, the graphical interaction interface in a form of a data stream to an interaction device for display comprises:
encoding (305), by the portable controlling device, the graphical interaction interface into a video stream of the graphical interaction interface, and sending (305) the video stream of the graphical interaction interface to the interaction device, so that the interaction device decodes (306) the video stream of the graphical interaction interface after receiving the video stream of the graphical interaction interface, renders (306) the decoded video stream of the graphical interaction interface into the graphical interaction interface for display.

7. A portable controlling device for intelligently controlling a device, comprising:
a first unit (801), configured to acquire parameter information of a controlled device in a current state, wherein the parameter information is used for reflecting a current running state of the controlled device;
a second unit (802), configured to generate a graphical interaction interface comprising the parameter information acquired by the first unit;
a third unit (803), configured to send the graphical interaction interface which is generated by the second unit and is in a form of a data stream to an interaction device for display;
a fourth unit (804), configured to receive an input event sent by the interaction device, wherein the input event is triggered by a user based on the parameter information displayed on the graphical interaction interface of the interaction device; and parse the input event to obtain a control instruction corresponding to the parameter information comprised in the graphical interaction interface, wherein:
the third unit (803) is further configured to send the control instruction obtained by the fourth unit to the controlled device, so that the controlled device performs, in response to the control instruction, a control operation corresponding to the current running state of the controlled device, wherein the performing a control operation corresponding to the current running state of the controlled device comprises performing an adjustment corresponding to the parameter information comprised in the graphical interaction interface;
wherein the portable controlling device is a plug-and-play device, and the portable controlling device is adapted to control the controlled device through an interface;
wherein the portable controlling device further comprises:
a fifth unit (805), configured to send a type acquiring instruction to the controlled device, and receive type information of the controlled device which is sent by the controlled device in response to the type acquiring instruction, the type information of the controlled device include a device type, model information, or a device manufacturer of the controlled device;
a sixth unit (806), configured to send, to a cloud server, identity information of the portable controlling device and the type information of the controlled device which is received by the fifth unit, and receive a device control service program, which matches with the type information of the controlled device and is sent by the cloud server after the cloud server authenticates the identity information of the portable controlling device to be valid; and
a seventh unit (807), configured to control the device control service program matching with the type information of the controlled device and is received by the sixth unit to run on the portable controlling device, so as to trigger the first unit to perform the operation of acquiring the parameter information of the controlled device in the current state.

8. The portable controlling device according to claim 7, wherein a manner for the fourth unit to parse the input event to obtain the control instruction corresponding to the parameter information comprised in the graphical interaction interface is specifically as follows:
the fourth unit(804) converts the input event into an input event matching with the graphical interaction interface generated by the portable controlling device, and parses the input event obtained through conversion to obtain the control instruction corresponding to the parameter information comprised in the graphical interaction interface.

9. The portable controlling device according to claim 7, wherein the portable controlling device further comprises:
an eighth unit (808), configured to send a software upgrade request which carries the identity information of the portable controlling device and version information of a device identification service program to the cloud server, and receive an upgrade packet of the device identification service program matching with the version information of the device identification service program, wherein the upgrade packet of the device identification service program is sent by the cloud server after the cloud server authenticates the identity information of the portable controlling device to be valid;
a ninth unit (809), configured to update and upgrade the device identification service program by using the upgrade packet of the device identification service program matching with the version information of the device identification service program, to obtain an upgraded device identification service program, wherein the upgrade packet of the device identification service program is received by the eighth unit; and
a tenth unit (810), configured to control the upgraded device identification service program obtained by the ninth unit to run, so as to trigger the fifth unit to perform the operation of sending the type acquiring instruction to the controlled device.

10. The portable controlling device according to any one of claims 7 to 9, wherein the third unit (803) is further configured to receive a connection establishment request sent by the interaction device, and send a connection completion response corresponding to the connection establishment request to the interaction device in response to the connection establishment request sent by the interaction device.

11. The portable controlling device according to any one of claims 7 to 10, wherein the first unit (801) is configured to send a parameter information query instruction to the controlled device, and receive the parameter information of the controlled device in the current state which is sent by the controlled device in response to the parameter information query instruction.

12. The portable controlling device according to any one of claims 7 to 11, wherein a specific manner for the third unit to send the graphical interaction interface in the form of a data stream to the interaction device for display is as follows:
the third unit (803) is specifically configured to encode the graphical interaction interface into a video stream of the graphical interaction interface, and send the video stream of the graphical interaction interface to the interaction device, so that the interaction device decodes the video stream of the graphical interaction interface after receiving the video stream of the graphical interaction interface, renders the decoded video stream of the graphical interaction interface into the graphical interaction interface for display.

13. A system for intelligently controlling a device, comprising a portable controlling device (1), a controlled device (2), and an interaction device (3), wherein:
the portable controlling device (1) is the portable controlling device according to any one of claims 7 to 12; and
the controlled device (2) is configured to perform, in response to the control instruction, a control operation corresponding to the current running state of the controlled device, wherein the performing a control operation corresponding to the current running state of the controlled device comprises performing an adjustment corresponding to the parameter information comprised in the graphical interaction interface; and
the interaction device (3) is configured to receive and display the graphical interaction interface which comprises the parameter information of the controlled device in the current state and is sent by the portable controlling device, and send, to the portable controlling device, the input event triggered by the user based on the parameter information displayed on the graphical interaction interface of the interaction device; and
wherein the portable controlling device (1) is a plug-and-play device, and the portable controlling device (1) is adapted to control the controlled device (2) through an interface.

## Patentansprüche

1. Verfahren zum intelligenten Steuern einer Vorrichtung, das Folgendes umfasst:
Erfassen (101) durch eine tragbare Steuervorrichtung von Parameterinformationen einer gesteuerten Vorrichtung in einem aktuellen Zustand, wobei die Parameterinformationen zum Widerspiegeln eines aktuellen Betriebszustands der gesteuerten Vorrichtung verwendet werden;
Erzeugen (102) durch die tragbare Steuervorrichtung einer grafischen Interaktions-Schnittstelle, die die Parameterinformationen umfasst, und Senden (103) der grafischen Interaktions-Schnittstelle in Form eines Datenstroms zu einer Interaktions-Vorrichtung zur Anzeige;
Empfangen (104) durch die tragbare Steuervorrichtung eines Eingangsereignisses, das durch die Interaktions-Vorrichtung gesendet wird, wobei das Eingangsereignis durch einen Anwender basierend auf den Parameterinformationen, die auf der grafischen Interaktions-Schnittstelle der Interaktions-Vorrichtung angezeigt werden, angestoßen wird;
Analysieren (104) durch die tragbare Steuervorrichtung des Eingangsereignisses, um eine Steueranweisung zu erhalten, die den Parameterinformationen entspricht, die in der grafischen Interaktions-Schnittstelle enthalten sind; und
Senden (105) durch die tragbare Steuervorrichtung der Steueranweisung an die gesteuerte Vorrichtung, so dass die gesteuerte Vorrichtung in Reaktion auf die Steueranweisung eine Steueroperation, die dem aktuellen Betriebszustand der gesteuerten Vorrichtung entspricht, ausführt, wobei das Ausführen einer Steueroperation, die dem aktuellen Betriebszustand der gesteuerten Vorrichtung entspricht, eine Anpassung umfasst, die den Parameterinformationen entspricht, die in der grafischen Interaktions-Schnittstelle enthalten sind;
wobei die tragbare Steuervorrichtung eine Plug-and-Play-Vorrichtung ist und die tragbare Steuervorrichtung ausgelegt ist, die gesteuerte Vorrichtung über eine Schnittstelle zu steuern; und
wobei das Verfahren vor dem Erfassen (101) durch die tragbare Steuervorrichtung von Parameterinformationen einer gesteuerten Vorrichtung in einem aktuellen Zustand ferner Folgendes umfasst:
Senden (501) durch die tragbare Steuervorrichtung einer Typerfassungsanweisung zu der gesteuerten Vorrichtung und Empfangen (502) von Typinformationen der gesteuerten Vorrichtung, die durch die gesteuerte Vorrichtung in Reaktion auf die Typerfassungsanweisung gesendet werden, wobei die Typinformationen der gesteuerten Vorrichtung einen Vorrichtungstyp, Modellinformationen oder einen Vorrichtungs-Hersteller der gesteuerten Vorrichtung enthalten;
Senden (503) durch die tragbare Steuervorrichtung von Identitätsinformationen der tragbaren Steuervorrichtung und der Typinformationen der gesteuerten Vorrichtung zu einem Cloud-Server und Empfangen (504) eines Vorrichtungssteuerungsdienstprogramms, das mit den Typinformationen der gesteuerten Vorrichtung übereinstimmt und durch den Cloud-Server gesendet wird, nachdem der Cloud-Server durch Authentifizierung bestimmt hat, dass die Identitätsinformationen der tragbaren Steuervorrichtung valide sind; und
Steuern (505) durch die tragbare Steuervorrichtung des Vorrichtungssteuerungsdienstprogramms, das mit den Typinformationen der gesteuerten Vorrichtung übereinstimmt, so dass es auf der tragbaren Steuervorrichtung abläuft, um das Ausführen des Schritts zum Erfassen von Parameterinformationen einer gesteuerten Vorrichtung in einem aktuellen Zustand anzustoßen.

2. Verfahren nach Anspruch 1, wobei das Analysieren durch die tragbare Steuervorrichtung des Eingangsereignisses, um eine Steueranweisung zu erhalten, die den Parameterinformationen, die in der grafischen Interaktions-Schnittstelle enthalten sind, entspricht, Folgendes umfasst:
Umsetzen durch die tragbare Steuervorrichtung des Eingangsereignisses in ein Eingangsereignis, das mit der grafischen Interaktions-Schnittstelle, die durch die tragbare Steuervorrichtung erzeugt ist, übereinstimmt, und Analysieren des Eingangsereignisses, das durch die Umsetzung erhalten wird, um die Steueranweisung zu erhalten, die den Parameterinformationen entspricht, die in der grafischen Interaktions-Schnittstelle enthalten sind.

3. Verfahren nach Anspruch 1, wobei das Verfahren vor dem Senden (501) durch die tragbare Steuervorrichtung einer Typerfassungsanweisung zu der gesteuerten Vorrichtung ferner Folgendes umfasst:
Senden (601) durch die tragbare Steuervorrichtung einer Software-Upgrade-Anforderung, die die Identitätsinformationen der tragbaren Steuervorrichtung und Versionsinformationen eines Vorrichtungsidentifizierungsdienstprogramms führt, zu dem Cloud-Server und Empfangen (602) eines Upgrade-Pakets des Vorrichtungsidentifizierungsdienstprogramms, das mit den Versionsinformationen des Vorrichtungsidentifizierungsdienstprogramms übereinstimmt, wobei das Upgrade-Paket des Vorrichtungsidentifizierungsdienstprogramms durch den Cloud-Server gesendet wird, nachdem der Cloud-Server über Authentifizierung bestimmt hat, dass die Identitätsinformationen der tragbaren Steuervorrichtung valide sind;
Aktualisieren und Upgraden (603) durch die tragbare Steuervorrichtung des Vorrichtungsidentifizierungsdienstprogramms unter Verwendung des Upgrade-Pakets des Vorrichtungsidentifizierungsdienstprogramms, das mit den Versionsinformationen des Vorrichtungsidentifizierungsdienstprogramms übereinstimmt, um ein upgegradetes Vorrichtungsidentifizierungsdienstprogramm zu erhalten; und
Steuern (604) durch die tragbare Steuervorrichtung des upgegradeten Vorrichtungsidentifizierungsdienstprogramms, so dass es abläuft, um das Ausführen des Schritts zum Senden einer Typerfassungsanweisung zu der gesteuerten Vorrichtung anzustoßen.

4. Verfahren nach Anspruch 1, 2 oder 3, wobei das Verfahren vor dem Senden durch die tragbare Steuervorrichtung der grafischen Interaktions-Schnittstelle in Form eines Datenstroms zu einer Interaktions-Vorrichtung zur Anzeige ferner Folgendes umfasst:
Empfangen durch die tragbare Steuervorrichtung einer Verbindungsaufbauanforderung, die durch die Interaktions-Vorrichtung gesendet wird, und Senden einer Verbindungsfertigstellungsantwort, die der Verbindungsaufbauanforderung entspricht, zu der Interaktions-Vorrichtung in Reaktion auf die Verbindungsaufbauanforderung, die durch die Interaktions-Vorrichtung gesendet wird.

5. Verfahren nach einem der Ansprüche 1 bis 4, wobei das Erfassen durch eine tragbare Steuervorrichtung von Parameterinformationen einer gesteuerten Vorrichtung in einem aktuellen Zustand Folgendes umfasst:
Senden (301) durch die tragbare Steuervorrichtung einer Parameterinformationsabfrageanweisung zu der gesteuerten Vorrichtung und Empfangen (303) der Parameterinformationen der gesteuerten Vorrichtung in dem aktuellen Zustand, die durch die gesteuerte Vorrichtung in Reaktion auf die Parameterinformationsabfrageanweisung gesendet werden.

6. Verfahren nach einem der Ansprüche 1 bis 5, wobei das Senden durch die tragbare Steuervorrichtung der grafischen Interaktions-Schnittstelle in Form eines Datenstroms zu einer Interaktions-Vorrichtung zur Anzeige Folgendes umfasst:
Codieren (305) durch die tragbare Steuervorrichtung der grafischen Interaktions-Schnittstelle in einen Videostrom der grafischen Interaktions-Schnittstelle und Senden (305) des Videostroms der grafischen Interaktions-Schnittstelle zu der Interaktions-Vorrichtung, so dass die Interaktions-Vorrichtung den Videostrom der grafischen Interaktions-Schnittstelle nach dem Empfangen des Videostroms der grafischen Interaktions-Schnittstelle decodiert (306), den decodierten Videostrom der grafischen Interaktions-Schnittstelle in die grafische Interaktions-Schnittstelle zur Anzeige wiedergibt (306).

7. Tragbare Steuervorrichtung zum intelligenten Steuern einer Vorrichtung, die Folgendes umfasst:
eine erste Einheit (801), die konfiguriert ist, Parameterinformationen einer gesteuerten Vorrichtung in einem aktuellen Zustand zu erfassen, wobei die Parameterinformationen zum Widerspiegeln eines aktuellen Betriebszustands der gesteuerten Vorrichtung verwendet werden;
eine zweite Einheit (802), die konfiguriert ist, eine grafische Interaktions-Schnittstelle zu erzeugen, die die durch die erste Einheit erfassten Parameterinformationen umfasst;
eine dritte Einheit (803), die konfiguriert ist, die grafische Interaktions-Schnittstelle, die durch die zweite Einheit erzeugt wird und in Form eines Datenstroms ist, zu einer Interaktions-Vorrichtung zur Anzeige zu senden;
eine vierte Einheit (804), die konfiguriert ist, ein Eingangsereignis, das durch die Interaktions-Vorrichtung gesendet wird, zu empfangen, wobei das Eingangsereignis durch einen Anwender basierend auf den Parameterinformationen, die auf der grafischen Interaktions-Schnittstelle der Interaktions-Vorrichtung angezeigt werden, angestoßen wird; und das Eingangsereignis zu analysieren, um eine Steueranweisung zu erhalten, die den Parameterinformationen entspricht, die in der grafischen Interaktions-Schnittstelle enthalten sind, wobei:
die dritte Einheit (803) ferner konfiguriert ist, die Steueranweisung, die durch die vierte Einheit erhalten wird, an die gesteuerte Vorrichtung zu senden, so dass die gesteuerte Vorrichtung in Reaktion auf die Steueranweisung eine Steueroperation ausführt, die dem aktuellen Betriebszustand der gesteuerten Vorrichtung entspricht, wobei das Ausführen einer Steueroperation, die dem aktuellen Betriebszustand der gesteuerten Vorrichtung entspricht, eine Anpassung umfasst, die den Parameterinformationen entspricht, die in der grafischen Interaktions-Schnittstelle enthalten sind;
wobei die tragbare Steuervorrichtung eine Plug-and-Play-Vorrichtung ist und die tragbare Steuervorrichtung ausgelegt ist, die gesteuerte Vorrichtung über eine Schnittstelle zu steuern;
wobei die tragbare Steuervorrichtung ferner Folgendes umfasst:
eine fünfte Einheit (805), die konfiguriert ist, eine Typerfassungsanweisung zu der gesteuerten Vorrichtung zu senden und Typinformationen der gesteuerten Vorrichtung, die durch die gesteuerte Vorrichtung in Reaktion auf die Typerfassungsanweisung gesendet werden, zu empfangen, wobei die Typinformationen der gesteuerten Vorrichtung einen Vorrichtungstyp, Modellinformationen oder einen Vorrichtungs-Hersteller der gesteuerten Vorrichtung enthalten;
eine sechste Einheit (806), die konfiguriert ist, Identitätsinformationen der tragbaren Steuervorrichtung und die Typinformationen der gesteuerten Vorrichtung, die durch die fünfte Einheit empfangen werden, zu einem Cloud-Server zu senden und ein Vorrichtungssteuerungsdienstprogramm zu empfangen, das mit den Typinformationen der gesteuerten Vorrichtung übereinstimmt und durch den Cloud-Server gesendet wird, nachdem der Cloud-Server die Identitätsinformationen der tragbaren Steuervorrichtung als valide authentifiziert hat; und
eine siebte Einheit (807), die konfiguriert ist, das Vorrichtungssteuerungsdienstprogramm, das mit den Typinformationen der gesteuerten Vorrichtung übereinstimmt und durch die sechste Einheit empfangen wird, zu steuern, so dass es auf der tragbaren Steuervorrichtung abläuft, um die erste Einheit anzustoßen, die Operation zum Erfassen der Parameterinformationen der gesteuerten Vorrichtung in dem aktuellen Zustand auszuführen.

8. Tragbare Steuervorrichtung nach Anspruch 7, wobei eine Art für die vierte Einheit, das Eingangsereignis zu analysieren, um die Steueranweisung zu erhalten, die den Parameterinformationen entspricht, die in der grafischen Interaktions-Schnittstelle enthalten sind, insbesondere wie folgt ist:
die vierte Einheit (804) setzt das Eingangsereignis in ein Eingangsereignis um, das mit der grafischen Interaktions-Schnittstelle übereinstimmt, die durch die tragbare Steuervorrichtung erzeugt ist, und analysiert das Eingangsereignis, das durch die Umsetzung erhalten wird, um die Steueranweisung zu erhalten, die den Parameterinformationen entspricht, die in der grafischen Interaktions-Schnittstelle enthalten sind.

9. Tragbare Steuervorrichtung nach Anspruch 7, wobei die tragbare Steuervorrichtung ferner Folgendes umfasst:
eine achte Einheit (808), die konfiguriert ist, eine Software-Upgrade-Anforderung, die die Identitätsinformationen der tragbaren Steuervorrichtung und Versionsinformationen eines Vorrichtungsidentifizierungsdienstprogramms führt, zu dem Cloud-Server zu senden und ein Upgrade-Paket des Vorrichtungsidentifizierungsdienstprogramms, das mit den Versionsinformationen des Vorrichtungsidentifizierungsdienstprogramms übereinstimmt, zu empfangen, wobei das Upgrade-Paket des Vorrichtungsidentifizierungsdienstprogramms durch den Cloud-Server gesendet wird, nachdem der Cloud-Server die Identitätsinformationen der tragbaren Steuervorrichtung als valide authentifiziert hat; eine neunte Einheit (809), die konfiguriert ist, das Vorrichtungsidentifizierungsdienstprogramm unter Verwendung des Upgrade-Pakets des Vorrichtungsidentifizierungsdienstprogramms, das mit den Versionsinformationen des Vorrichtungsidentifizierungsdienstprogramms übereinstimmt, zu aktualisieren und upzugraden, um ein upgegradetes Vorrichtungsidentifizierungsdienstprogramm zu erhalten, wobei das Upgrade-Paket des Vorrichtungsidentifizierungsdienstprogramms durch die achte Einheit empfangen wird; und
eine zehnte Einheit (810), die konfiguriert ist, das upgegradete Vorrichtungsidentifizierungsdienstprogramm, das durch die neunte Einheit erhalten wird, zu steuern, so dass es abläuft, um die fünfte Einheit anzustoßen, die Operation zum Senden der Typerfassungsanweisung zu der gesteuerten Vorrichtung auszuführen.

10. Tragbare Steuervorrichtung nach einem der Ansprüche 7 bis 9, wobei die dritte Einheit (803) ferner konfiguriert ist, eine Verbindungsaufbauanforderung, die durch die Interaktions-Vorrichtung gesendet wird, zu empfangen und eine Verbindungsfertigstellungsantwort, die der Verbindungsaufbauanforderung entspricht, zu der Interaktions-Vorrichtung in Reaktion auf die durch die Interaktions-Vorrichtung gesendete Verbindungsaufbauanforderung zu senden.

11. Tragbare Steuervorrichtung nach einem der Ansprüche 7 bis 10, wobei die erste Einheit (801) konfiguriert ist, eine Parameterinformationsabfrageanweisung zu der gesteuerten Vorrichtung zu senden und die Parameterinformationen der gesteuerten Vorrichtung in dem aktuellen Zustand, die durch die gesteuerte Vorrichtung in Reaktion auf die Parameterinformationsabfrageanweisung gesendet werden, zu empfangen.

12. Tragbare Steuervorrichtung nach einem der Ansprüche 7 bis 11, wobei eine spezifische Art für die dritte Einheit, die grafische Interaktions-Schnittstelle in Form eines Datenstroms zu der Interaktions-Vorrichtung zur Anzeige zu senden, wie folgt ist:
die dritte Einheit (803) ist insbesondere konfiguriert, die grafische Interaktions-Schnittstelle in einen Videostrom der grafischen Interaktions-Schnittstelle zu codieren und den Videostrom der grafischen Interaktions-Schnittstelle zu der Interaktions-Vorrichtung zu senden, so dass die Interaktions-Vorrichtung den Videostrom der grafischen Interaktions-Schnittstelle nach dem Empfangen des Videostroms der grafischen Interaktions-Schnittstelle decodiert, den decodierten Videostrom der grafischen Interaktions-Schnittstelle in die grafische Interaktions-Schnittstelle zur Anzeige wiedergibt.

13. System zum intelligenten Steuern einer Vorrichtung, das eine tragbare Steuervorrichtung (1), eine gesteuerte Vorrichtung (2) und eine Interaktions-Vorrichtung (3) umfasst, wobei:
die tragbare Steuervorrichtung (1) die tragbare Steuervorrichtung nach einem der Ansprüche 7 bis 12 ist; und
die gesteuerte Vorrichtung (2) konfiguriert ist, in Reaktion auf die Steueranweisung eine Steueroperation, die dem aktuellen Betriebszustand der gesteuerten Vorrichtung entspricht, auszuführen, wobei das Ausführen einer Steueroperation, die dem aktuellen Betriebszustand der gesteuerten Vorrichtung entspricht, Ausführen einer Anpassung umfasst, die den Parameterinformationen entspricht, die in der grafischen Interaktions-Schnittstelle enthalten sind; und
die Interaktions-Vorrichtung (3) konfiguriert ist, die grafische Interaktions-Schnittstelle, die die Parameterinformationen der gesteuerten Vorrichtung in dem aktuellen Zustand umfasst und durch die tragbare Steuervorrichtung gesendet wird, zu empfangen und anzuzeigen und zu der tragbaren Steuervorrichtung das Eingangsereignis zu senden, das durch den Anwender basierend auf den auf der grafischen Interaktions-Schnittstelle der Interaktions-Vorrichtung angezeigten Parameterinformationen angestoßen wird; und
wobei die tragbare Steuervorrichtung (1) eine Plug-and-Play-Vorrichtung ist und die tragbare Steuervorrichtung (1) ausgelegt ist, die gesteuerte Vorrichtung (2) über eine Schnittstelle zu steuern.

## Revendications

1. Procédé pour la commande intelligente d'un dispositif, comprenant les actions consistant à :
faire acquérir (101), par un dispositif de commande portable, des informations paramétriques d'un dispositif commandé dans un état actuel, les informations paramétriques étant utilisées pour refléter un état de fonctionnement actuel du dispositif commandé ;
faire générer (102), par le dispositif de commande portable, une interface d'interaction graphique comprenant les informations paramétriques, et envoyer (103) l'interface d'interaction graphique sous la forme d'un flux de données vers un dispositif d'interaction à des fins d'affichage ;
faire recevoir (104), par le dispositif de commande portable, un événement de saisie envoyé par le dispositif d'interaction, l'événement de saisie étant déclenché par un utilisateur sur la base des informations paramétriques affichées sur l'interface d'interaction graphique du dispositif d'interaction ;
faire analyser (104), par le dispositif de commande portable, l'événement de saisie pour obtenir une instruction de commande correspondant aux informations paramétriques comprises dans l'interface d'interaction graphique ; et
faire envoyer (105), par le dispositif de commande portable, l'instruction de commande vers le dispositif commandé, de sorte que le dispositif commandé réalise, en réaction à l'instruction de commande, une opération de commande correspondant à l'état de fonctionnement actuel du dispositif commandé, dans lequel la réalisation d'une opération de commande correspondant à l'état de fonctionnement actuel du dispositif commandé comprend la réalisation d'un ajustement correspondant aux informations paramétriques comprises dans l'interface d'interaction graphique ;
dans lequel le dispositif de commande portable est un dispositif « plug-and-play », et le dispositif de commande portable est conçu pour commander le dispositif commandé par l'intermédiaire d'une interface ; et
dans lequel avant l'acquisition (101), par le dispositif de commande portable, d'informations paramétriques d'un dispositif commandé dans un état actuel, le procédé comprenant en outre les actions consistant à :
faire envoyer (501), par le dispositif de commande portable, une instruction d'acquisition de type vers le dispositif commandé, et recevoir (502) l'information de type du dispositif commandé qui est envoyée par le dispositif commandé en réaction à l'instruction d'acquisition de type, l'information de type du dispositif commandé incluant un type de dispositif, une information de modèle, ou un fabricant de dispositif du dispositif commandé ;
faire envoyer (503), par le dispositif de commande portable, des informations identitaires du dispositif de commande portable et les informations de type du dispositif commandé vers un serveur en nuage, et recevoir (504) un programme de service de commande de dispositif, qui concorde avec l'information de type du dispositif commandé et est envoyé par le serveur en nuage une fois que le serveur en nuage a déterminé, par l'intermédiaire d'une authentification, que les informations identitaires du dispositif de commande portable sont valides ; et
faire commander (505), par le dispositif de commande portable, le programme de service de commande de dispositif concordant avec l'information de type du dispositif commandé en vue d'une exécution sur le dispositif de commande portable, de sorte à déclencher la réalisation de l'étape d'acquisition d'informations paramétriques d'un dispositif commandé dans un état actuel.

2. Procédé selon la revendication 1, l'analyse, par le dispositif de commande portable, de l'événement de saisie pour obtenir une instruction de commande correspondant aux informations paramétriques comprises dans l'interface d'interaction graphique comprenant les actions consistant à :
faire convertir, par le dispositif de commande portable, l'événement de saisie en un événement de saisie concordant avec l'interface d'interaction graphique générée par le dispositif de commande portable, et analyser l'événement de saisie obtenu par l'intermédiaire de la conversion afin d'obtenir l'instruction de commande correspondant aux informations paramétriques comprises dans l'interface d'interaction graphique.

3. Procédé selon la revendication 1, avant l'envoi (501), par le dispositif de commande portable, d'une instruction d'acquisition de type vers le dispositif commandé, le procédé comprenant en outre les actions consistant à :
faire envoyer (601), par le dispositif de commande portable, une requête de mise à niveau logicielle qui porte les informations idenditaires du dispositif de commande portable et les informations de version d'un programme de service d'identification de dispositif vers le serveur en nuage, et recevoir (602) un paquet de mise à niveau du programme de service d'identification de dispositif concordant avec les informations de version du programme de service d'identification de dispositif, dans lequel le paquet de mise à niveau du programme de service d'identification de dispositif est envoyé par le serveur en nuage une fois que le serveur en nuage a déterminé, par l'intermédiaire d'une authentification, que les informations identitaires du dispositif de commande portable sont valides ;
faire mettre à jour et faire mettre à niveau (603), par le dispositif de commande portable, le programme de service d'identification de dispositif grâce à l'utilisation du paquet de mise à niveau du programme de service d'identification de dispositif concordant avec les informations de version du programme de service d'identification de dispositif, afin d'obtenir un programme de service d'identification de dispositif mis à niveau ; et
faire assurer la commande (604), par le dispositif de commande portable, permettant l'exécution du programme de service d'identification de dispositif mis à niveau, de sorte à déclencher la réalisation de l'étape consistant à envoyer une instruction d'acquisition de type vers le dispositif commandé.

4. Procédé selon la revendication 1, 2 ou 3, avant l'envoi, par le dispositif de commande portable, de l'interface d'interaction graphique sous la forme d'un flux de données vers un dispositif d'interaction à des fins d'affichage, le procédé comprenant en outre l'action consistant à :
faire recevoir, par le dispositif de commande portable, une requête d'établissement de connexion envoyée par le dispositif d'interaction, et à envoyer une réponse d'achèvement de la connexion correspondant à la requête d'établissement de connexion vers le dispositif d'interaction en réaction à la requête d'établissement de connexion ayant été envoyée par le dispositif d'interaction.

5. Procédé selon l'une quelconque des revendications 1 à 4, l'acquisition, par un dispositif de commande portable, d'informations paramétriques d'un dispositif commandé dans un état actuel comprenant l'action consistant à :
faire envoyer (301), par le dispositif de commande portable, une instruction d'interrogation d'informations paramétriques vers le dispositif commandé, et recevoir (303) les informations paramétriques du dispositif commandé dans l'état actuel lesquelles sont envoyées par le dispositif commandé en réaction à l'instruction d'interrogation d'informations paramétriques.

6. Procédé selon l'une quelconque des revendications 1 à 5, l'envoi, par le dispositif de commande portable, de l'interface d'interaction graphique sous la forme d'un flux de données vers un dispositif d'interaction à des fins d'affichage comprenant les actions consistant à :
faire coder (305), par le dispositif de commande portable, l'interface d'interaction graphique dans un flux vidéo de l'interface d'interaction graphique, et envoyer (305) le flux vidéo de l'interface d'interaction graphique vers le dispositif d'interaction, de sorte que le dispositif d'interaction décode (306) le flux vidéo de l'interface d'interaction graphique après réception du flux vidéo de l'interface d'interaction graphique, fasse le rendu (306) du flux vidéo décodé de l'interface d'interaction graphique dans l'interface d'interaction graphique à des fins d'affichage.

7. Dispositif de commande portable pour la commande intelligente d'un dispositif, comprenant :
une première unité (801), configurée de façon à acquérir des informations paramétriques d'un dispositif commandé dans un état actuel, les informations paramétriques étant utilisées pour refléter un état de fonctionnement actuel du dispositif commandé ;
une deuxième unité (802), configurée de façon à générer une interface d'interaction graphique comprenant les informations paramétriques acquises par la première unité ;
une troisième unité (803), configurée de façon à envoyer l'interface d'interaction graphique qui est générée par la deuxième unité et se présente sous la forme d'un flux de données vers un dispositif d'interaction à des fins d'affichage ;
une quatrième unité (804), configurée de façon à recevoir un événement de saisie envoyé par le dispositif d'interaction, l'événement de saisie étant déclenché par un utilisateur sur la base des informations paramétriques affichées sur l'interface d'interaction graphique du dispositif d'interaction ; et analyser l'événement de saisie pour obtenir une instruction de commande correspondant aux informations paramétriques comprises dans l'interface d'interaction graphique, dans lequel :
la troisième unité (803) est configurée en outre de façon à envoyer l'instruction de commande obtenue par la quatrième unité vers le dispositif commandé, de sorte que le dispositif commandé réalise, en réaction à l'instruction de commande, une opération de commande correspondant à l'état de fonctionnement actuel du dispositif commandé, dans lequel la réalisation d'une opération de commande correspondant à l'état de fonctionnement actuel du dispositif commandé comprend la réalisation d'un ajustement correspondant aux informations paramétriques comprises dans l'interface d'interaction graphique ;
dans lequel le dispositif de commande portable est un dispositif « plug-and-play », et le dispositif de commande portable est conçu pour commander le dispositif commandé par l'intermédiaire d'une interface ;
dans lequel le dispositif de commande portable comprend en outre :
une cinquième unité (805), configurée de façon à envoyer une instruction d'acquisition de type vers le dispositif commandé, et recevoir l'information de type du dispositif commandé qui est envoyée par le dispositif commandé en réaction à l'instruction d'acquisition de type, l'information de type du dispositif commandé incluant un type de dispositif, une information de modèle, ou un fabricant de dispositif du dispositif commandé ;
une sixième unité (806), configurée de façon à envoyer, vers un serveur en nuage, des informations identitaires du dispositif de commande portable et l'information de type du dispositif commandé qui est reçue par la cinquième unité, et recevoir un programme de service de commande de dispositif, qui concorde avec l'information de type du dispositif commandé et est envoyée par le serveur en nuage une fois que le serveur en nuage a authentifié les informations identitaires du dispositif de commande portable comme étant valides ; et
une septième unité (807), configurée de façon à commander le programme de service de commande de dispositif concordant avec l'information de type du dispositif commandé et est reçu par la sixième unité pour une exécution sur le dispositif de commande portable, de sorte à déclencher la première unité pour qu'elle réalise l'opération d'acquisition des informations paramétriques du dispositif commandé dans l'état actuel.

8. Dispositif de commande portable selon la revendication 7, une manière permettant à la quatrième unité d'analyser l'événement de saisie pour obtenir l'instruction de commande correspondant aux informations paramétriques comprises dans l'interface d'interaction graphique étant spécifiquement comme suit :
la quatrième unité (804) convertit l'événement de saisie en un événement de saisie concordant avec l'interface d'interaction graphique générée par le dispositif de commande portable, et analyse l'événement de saisie obtenu par l'intermédiaire d'une conversion afin d'obtenir l'instruction de commande correspondant aux informations paramétriques comprises dans l'interface d'interaction graphique.

9. Dispositif de commande portable selon la revendication 7, le dispositif de commande portable comprenant en outre :
une huitième unité (808) configurée de façon à envoyer une requête de mise à niveau logicielle qui porte les informations idenditaires du dispositif de commande portable et les informations de version d'un programme de service d'identification de dispositif vers le serveur en nuage, et recevoir un paquet de mise à niveau du programme de service d'identification de dispositif concordant avec les informations de version du programme de service d'identification de dispositif, dans lequel le paquet de mise à niveau du programme de service d'identification de dispositif est envoyé par le serveur en nuage une fois que le serveur en nuage a authentifié les informations identitaires du dispositif de commande portable comme étant valides ;
une neuvième unité (809) configurée de façon à mettre à jour et mettre à niveau le programme de service d'identification de dispositif grâce à l'utilisation du paquet de mise à niveau du programme de service d'identification de dispositif concordant avec les informations de version du programme de service d'identification de dispositif, afin d'obtenir un programme de service d'identification de dispositif mis à niveau, dans lequel le paquet de mise à niveau du programme de service d'identification du dispositif est reçu par la huitième unité ; et
une dixième unité (810) configurée de façon à commander l'exécution du programme de service d'identification de dispositif mis à niveau ayant été obtenu par la neuvième unité, de sorte à déclencher la cinquième unité afin de réaliser l'opération consistant à envoyer l'instruction d'acquisition de type vers le dispositif commandé.

10. Dispositif de commande portable selon l'une quelconque des revendications 7 à 9 :
la troisième unité (803) étant configurée en outre de façon à recevoir une requête d'établissement de connexion envoyée par le dispositif d'interaction, et à envoyer une réponse d'achèvement de la connexion correspondant à la requête d'établissement de connexion vers le dispositif d'interaction en réaction à la requête d'établissement de connexion ayant été envoyée par le dispositif d'interaction.

11. Dispositif de commande portable selon l'une quelconque des revendications 7 à 10, la première unité (801) étant configurée de façon à envoyer une instruction d'interrogation d'informations paramétriques vers le dispositif commandé, et à recevoir les informations paramétriques du dispositif commandé dans l'état actuel lesquelles sont envoyées par le dispositif commandé en réaction à l'instruction d'interrogation d'informations paramétriques.

12. Dispositif de commande portable selon l'une quelconque des revendications 7 à 11, une manière spécifique permettant à la troisième unité d'envoyer l'interface d'interaction graphique sous la forme d'un flux de données vers le dispositif d'interaction à des fins d'affichage, étant comme suit :
la troisième unité (803) est configurée spécifiquement de façon à coder l'interface d'interaction graphique dans un flux vidéo de l'interface d'interaction graphique, et à envoyer le flux vidéo de l'interface d'interaction graphique vers le dispositif d'interaction, de sorte que le dispositif d'interaction décode le flux vidéo de l'interface d'interaction graphique après réception du flux vidéo de l'interface d'interaction graphique, fasse le rendu du flux vidéo décodé de l'interface d'interaction graphique dans l'interface d'interaction graphique à des fins d'affichage.

13. Système pour la commande intelligente d'un dispositif, comprenant un dispositif de commande portable (1), un dispositif commandé (2), et un dispositif d'interaction (3) :
le dispositif de commande portable (1) étant le dispositif de commande portable selon l'une quelconque des revendications 7 à 12 ; et
le dispositif commandé (2) étant configuré de façon à réaliser, en réaction à l'instruction de commande, une opération de commande correspondant à l'état de fonctionnement actuel du dispositif commandé, la réalisation d'une opération de commande correspondant à l'état de fonctionnement actuel du dispositif commandé comprenant la réalisation d'un ajustement correspondant aux informations paramétriques comprises dans l'interface d'interaction graphique ; et
le dispositif d'interaction (3) étant configuré de façon à recevoir et afficher l'interface d'interaction graphique qui comprend les informations paramétriques du dispositif commandé dans l'état actuel et est envoyée par le dispositif de commande portable, et à envoyer, vers le dispositif de commande portable, l'événement de saisie déclenché par l'utilisateur sur la base des informations paramétriques affichées sur l'interface d'interaction graphique du dispositif d'interaction ; et
dans lequel le dispositif de commande portable (1) est un dispositif « plug-and-play », et le dispositif de commande portable (1) est conçu pour commander le dispositif commandé (2) par l'intermédiaire d'une interface.
